# EUROPEAN PATENT SPECIFICATION

(11) **EP 4 019 360 B1**
(45) Date of publication and mention of the grant of the patent: **11.03.2026**
(21) Application number: 20859119.8
(22) Date of filing: 19.08.2020
(51) Int. Cl.: B60L 13/04, B60L 15/00, B61B 13/08, B65G 54/02, B65G 47/96

(54) **GUIDE MECHANISM FOR CONVEYANCE CART, AND SORTING CONVEYOR**
FÜHRUNGSMECHANISMUS FÜR FÖRDETWAGEN UND SORTIERFÖRDERER
MÉCANISME DE GUIDAGE POUR CHARIOT DE TRANSPORT, ET TRANSPORTEUR DE TRI

(30) Priority: 23.08.2019 JP 2019153154
(43) Date of publication of application: 29.06.2022
(73) Proprietor: Sanki Engineering Co., Ltd, Tokyo 1048506 (JP); National University Corporation Gunma University, Maebashi-shi, Gunma 3718510 (JP)
(72) Inventor: HISHINUMA, Nobuya, Tokyo 1048506 (JP); KURITA, Nobuyuki, Maebashi-shi, Gunma 3718510 (JP)
(74) Representative: Cabinet Beau de Loménie
(86) International application number: PCT/JP2020/031291
(87) International publication number: WO 2021/039538

(56) References cited:
- CN-A- 1 972 857
- JP-A- 2018 122 986
- JP-A- 2018 122 986
- JP-A- 2019 522 453
- JP-A- H0 919 005
- JP-A- H0 919 005
- JP-A- H10 236 748
- JP-A- H10 236 748
- JP-A- S61 102 105
- JP-B2- 3 793 013
- JP-U- H01 159 507

## Description

### Field

The present invention relates to a guide mechanism used for a plurality of conveyance carts which are connected in an endless manner, and a sorting conveyor comprising the guide mechanism.

### Background

A sorting conveyor is generally known in which a large number of conveyance carts are connected in an endless manner, the conveyance cart having a conveyor (a conveyor for a cross sorter) on which a transferred item (a conveyance object) can be placed and which can transfer the item placed at a predetermined position in a direction perpendicular to a conveyance direction, and these conveyance carts can be caused to travel along a conveyance route having a loop shape such as a track shape using a suitable drive device. In such a sorting conveyor, a configuration is generally adopted in which a pair of left and right traveling rails are provided on the conveyance route, while each conveyance cart is provided with wheels capable of rolling on each upper surface of the pair of left and right traveling routes, the upper surface serving as a traveling surface, and a guide wheel capable of rotating while slidably contacting a side surface of each traveling rail is provided on each side on a rear end side in the traveling direction of the conveyance cart in the conveyance direction of the conveyance route. For instance, PTL6 discloses a sorting conveyor for moving a plurality of connected transport carriages along a loop-shaped transport route comprising a transporting carriage having guide wheel units at both end portions in the width direction of the transporting carriage of the side frame.

In recent years, there has also been proposed a technique for stably conveying an item while increasing the conveyance speed of the conveyance object. For example, in PTL 1, it is proposed that the traveling rails are arranged to have a height difference on a curve of the conveyance route so that an attitude of the conveyance cart in the conveyance direction is inclined downward toward a centripetal point side of the curve, and at the curve, the traveling rails are arranged reflecting an inclination angle generated by the height difference between the traveling rails on the curve, and an angle formed between an extending direction of the link of a head-side conveyance cart and an extending direction of the link of an end-side conveyance cart, at least in a predetermined range from a starting position of the curve. In PTL 1, adopting the above-described configuration can reduce generation of abnormal noise due to contact between the wheels and the traveling rails and contact between the guide wheels and the traveling rails, the contact being caused by a twist occurring between the adjacent conveyance carts.

In the sorting conveyor including a large number of conveyance carts connected in an annular manner, a configuration is adopted in which the wheels provided in the conveyance cart roll on the upper surfaces of the pair of left and right traveling rails, the upper surface serving as a traveling surface. Thus, a friction force between the traveling rail and the wheel rolling on the upper surface of the traveling rail and a friction force at a bearing of the wheel rotational shaft rollably and pivotably supported by the traveling cart are large while the conveyance cart is traveling. Accordingly, to stably convey an item while increasing the conveyance speed of the conveyance object, it is necessary to provide high-output drive devices at a plurality of positions of the conveyance route, as the drive devices causing the conveyance carts to travel, which causes an increase in initial cost and an increase in driving power. Furthermore, the use of the urethane made wheel with high noise reduction capability causes significant wear of the wheel, which requires frequent maintenance. Accordingly, the sorting conveyor using the conveyance carts having the wheels capable of rolling on the upper surfaces of the traveling rails leads to an increase in running cost.

In recent years, there has been proposed a technique in which when a mobile body (corresponding to the conveyance cart) is moved along a guide rail (corresponding to the traveling rail) in a state in which the mobile body is levitated using an electromagnetic force generated by an electromagnet, the friction force and abnormal noise generated between the guide rail and the mobile body can be prevented, and an item can be stably conveyed while increasing the conveyance speed of the conveyance object (see PTL 2 and PTL 3 and PTL5). For instance, PTL5 discloses a magnetic levitation moving apparatus including a rail and a table arranged so as to sandwich the rail. PTL4 discloses an elevator car comprising several E-shaped magnetic units guiding the elevator car along vertical guide rails.

### Citation List

### Patent Literature

[PTL 1] JP 2018-122985 A
[PTL 2] JP 2700686 B2
[PTL 3] JP H8-163712 A
[PLT 4] CN1972857 A
[PLT 5] JP3793013 B2
[PLT 6] JP2018122986 A JP H09 19005 A discloses a guide mechanism for a conveyance cart which is used for a conveyance cart configured to travel along a guide rail made of a ferromagnetic material provided on a conveyance route, and is provided in the conveyance cart, the guide mechanism comprising:a permanent magnet configured to produce a magnetic field; and an electromagnetic unit according to the state of the art.

### Summary

### Technical Problem

However, in the configuration in which a mobile body is moved along a guide rail in a state in which the mobile body is levitated using an electromagnetic force generated by an electromagnet, the electromagnet is always excited so that the mobile body falls within a predetermined range with respect to a levitated quantity and when an item is placed on the mobile body, it is necessary to further excite the electromagnet according to the weight of the item placed on the mobile body. Accordingly, in the configuration in which the mobile body is levitated using the electromagnet, a large quantity of electric power is required to excite the electromagnet. When the position of the mobile body with respect to the guide rail in the left-right direction is controlled by the electromagnet, it is necessary to supply the electric power to the electromagnet that controls the position of the mobile body in the left-right direction, which further requires the electric power. In this way, when the mobile body is stably moved along the guide rail in a state in which the mobile body is levitated using the electromagnet, a larger quantity of electric power is required, which runs counter to energy saving objectives.

The present invention has an object to provide a technique which makes it possible to move a mobile body along a guide rail stably and at a higher speed, even though a large quantity of electric power is not supplied.

### Solution to Problem

To solve the above-described problems, a guide mechanism for a conveyance cart of the present invention is applied to a guide mechanism for a conveyance cart which is used for a conveyance cart configured to travel along a guide rail made of a ferromagnetic material provided on a conveyance route, and is provided in the conveyance cart. The guide mechanism includes a permanent magnet configured to produce a magnetic field, two electromagnetic units, and a holding member. Each electromagnetic unit includes a core that includes a first iron core portion which is positioned below the guide rail, and attracts the guide rail from below using a magnetic field produced by the permanent magnet, a second iron core portion which is positioned on one end side in a width direction of the conveyance cart, and attracts the guide rail from the one end side in the width direction of the conveyance cart using the magnetic field produced by the permanent magnet, and a third iron core portion which is arranged with a predetermined interval from the second iron core portion in the width direction of the conveyance cart, and attracts the guide rail in a direction opposite to an attracting direction by the second iron core portion using the magnetic field produced by the permanent magnet, a first coil portion which is wound around the first iron core portion, and causes a change in a magnetic flux density acting between the first iron core portion and the guide rail during power supply, a second coil portion which is wound around the second iron core portion, and causes a change in a magnetic flux density acting between the second iron core portion and the guide rail during the power supply, and a third coil portion which is wound around the third iron core portion, and causes a change in a magnetic flux density acting between the third iron core portion and the guide rail during the power supply. The holding member is configured to hold the two electromagnetic units and the permanent magnet in a state in which the permanent magnet is held between the three iron core portions of one electromagnetic unit of the two electromagnetic units and the three iron core portions of the other electromagnetic unit, and to be pivotally supported by a support member fixed to a link member of the conveyance cart with a longitudinal direction aligned with the width direction of the conveyance cart.

When the permanent magnet is held between the two electromagnetic units, the magnetic field produced by the permanent magnet forms a magnetic circuit of a first magnetic loop which passes through the first iron core portion of one electromagnetic unit of the two electromagnetic units, the guide rail, and the first iron core portion of the other electromagnetic unit of the two electromagnetic units, a magnetic circuit of a second closed loop which passes through the second iron core portion of one electromagnetic unit of the two electromagnetic units, the guide rail, and the second iron core portion of the other electromagnetic unit of the two electromagnetic units, and a magnetic circuit of a third closed loop which passes the third iron core portion of one electromagnetic unit of the two electromagnetic units, the guide rail, and the third iron core portion of the other electromagnetic unit of the two electromagnetic units.

The guide mechanism for a conveyance cart includes a first distance sensor which is provided on a side of the guide rail and is configured to detect a distance in the width direction of the conveyance cart, a second distance sensor which is provided below the guide rail, and is configured to detect a distance in an up-down direction of the conveyance cart, a power supply unit configured to supply electric power to each coil portion of the electromagnetic unit, a calculation unit configured to calculate a variation amount in each of the width direction and the up-down direction of the conveyance cart using detection signals from the first distance sensor and the second distance sensor, and a control unit configured to control the electric power to be supplied from the power supply unit to the coil portions of each of the two electromagnetic units based on results of the variation amounts calculated by the calculation unit.

The control unit is configured to control the power supply unit to increase the magnetic flux density acting between the first iron core portion and the guide rail by supplying the electric power to the first coil portion wound around the first iron core portion of each of the two electromagnetic units, based on the variation amount in the up-down direction of the conveyance cart due to sending of a conveyance object onto the conveyance cart.

The control unit is configured to control the power supply unit to change the magnetic flux density acting between the first iron core portion and the guide rail by supplying the electric power to the first coil portion wound around the first iron core portion of each of the two electromagnetic units, based on the variation amount in the up-down direction of the conveyance cart based on a height difference of the conveyance route.

The control unit is configured to control the power supply unit to change the magnetic flux density acting between the second iron core portion and the guide rail and the magnetic flux density acting between the third iron core portion and the guide rail by supplying the electric power to the second coil portion wound around the second iron core portion and the third coil portion of each of the two electromagnetic units, based on the variation amount in the width direction of the conveyance cart when the conveyance cart passes through a curve in the conveyance route.

The guide mechanism for a conveyance cart includes a first guide wheel which is pivotally supported by the holding member to be positioned above the guide rail, and is brought in sliding contact with a top of the guide rail when the conveyance cart moves downward, to prevent deviation of the guide rail.

The guide mechanism for a conveyance cart includes a pair of second guide wheels which are pivotally supported by the holding member to be positioned on sides of the guide rail, and are brought in sliding contact with sides of the guide rail when the conveyance cart moves in the width direction, to prevent the core of the electromagnetic unit from contacting the guide rail.

An external cross-sectional shape of the guide rail is a round shape or an ellipse shape, a surface facing the guide rail surface of the first iron core portion in a non-contact manner forms a recessed surface at a curvature which is substantially equal to a curvature of a facing guide rail surface, a surface facing the guide rail surface of the second iron core portion in a non-contact manner forms a recessed surface at a curvature which is substantially equal to a curvature of a facing guide rail surface, and a surface facing the guide rail surface of the third iron core portion in a non-contact manner forms a recessed surface at a curvature which is substantially equal to a curvature of a facing guide rail surface.

In a sorting conveyor of the present invention comprising the guide mechanism/ unit in which a plurality of conveyance carts each including a link extending in one direction, and a conveyor for a cross sorter configured to convey a conveyance object in a direction perpendicular to an extending direction of the link are connected to one another by front and rear ends of the link, and the plurality of conveyance carts are caused to travel along a guide rail made of a ferromagnetic material provided on a conveyance route on receipt of a driving force from a driving source arranged in the conveyance route, when traveling along the conveyance route, the conveyance cart includes a guide unit configured to guide a traveling direction of the conveyance cart along the guide rail in a non-contact manner with respect to the guide rail. The guide unit includes a permanent magnet configured to produce a magnetic field, two electromagnetic units, and a holding member. Each electromagnetic unit includes a core that includes a first iron core portion which is positioned below the guide rail, and attracts the guide rail from below using a magnetic field produced by the permanent magnet, a second iron core portion which is positioned on one end side in a width direction of the conveyance cart, and attracts the guide rail from the one end side in the width direction of the conveyance cart using the magnetic field produced by the permanent magnet, and a third iron core portion which is arranged with a predetermined interval from the second iron core portion in the width direction of the conveyance cart, and attracts the guide rail in a direction opposite to an attracting direction by the second iron core portion using the magnetic field produced by the permanent magnet, a first coil portion which is wound around the first iron core portion, and causes a change in a magnetic flux density acting between the first iron core portion and the guide rail during power supply, a second coil portion which is wound around the second iron core portion, and causes a change in a magnetic flux density acting between the second iron core portion and the guide rail during the power supply, and a third coil portion which is wound around the third iron core portion, and causes a change in a magnetic flux density acting between the third iron core portion and the guide rail during the power supply. The holding member is configured to hold the two electromagnetic units and the permanent magnet in a state in which the permanent magnet is held between the three iron core portions of one electromagnetic unit of the two electromagnetic units and the three iron core portions of the other electromagnetic unit, and to be pivotally supported by a support member fixed to a link member of the conveyance cart with a longitudinal direction aligned with the width direction of the conveyance cart.

When the permanent magnet is held between the two electromagnetic units, the magnetic field produced by the permanent magnet forms a magnetic circuit of a first magnetic loop which passes through the first iron core portion of one electromagnetic unit of the two electromagnetic units, the guide rail, and the first iron core portion of the other electromagnetic unit of the two electromagnetic units, a magnetic circuit of a second closed loop which passes through the second iron core portion of one electromagnetic unit of the two electromagnetic units, the guide rail, and the second iron core portion of the other electromagnetic unit of the two electromagnetic units, and a magnetic circuit of a third closed loop which passes the third iron core portion of one electromagnetic unit of the two electromagnetic units, the guide rail, and the third iron core portion of the other electromagnetic unit of the two electromagnetic units.

The guide unit includes a first distance sensor which is provided on a side of the guide rail and is configured to detect a distance in the width direction of the conveyance cart, and a second distance sensor which is provided below the guide rail, and is configured to detect a distance in an up-down direction of the conveyance cart, and the conveyance cart includes a power supply unit configured to supply electric power to each coil portion of the electromagnetic unit, a calculation unit configured to calculate a variation amount in each of the width direction and the up-down direction of the conveyance cart using detection signals from the first distance sensor and the second distance sensor, and a control unit configured to control the electric power to be supplied from the power supply unit to the coil portions of each of the two electromagnetic units based on results of the variation amounts calculated by the calculation unit.

The control unit is configured to control the power supply unit to increase the magnetic flux density acting between the first iron core portion and the guide rail by supplying the electric power to the first coil portion wound around the first iron core portion of each of the two electromagnetic units, based on the variation amount in the up-down direction of the conveyance cart due to sending of the conveyance object onto the conveyer for a cross sorter.

The control unit is configured to control the power supply unit to change the magnetic flux density acting between the first iron core portion and the guide rail by supplying the electric power to the first coil portion wound around the first iron core portion of each of the two electromagnetic units, based on the variation amount in the up-down direction of the conveyance cart based on a height difference of the conveyance route.

The control unit is configured to control the power supply unit to change the magnetic flux density acting between the second iron core portion and the guide rail and the magnetic flux density acting between the third iron core portion and the guide rail by supplying the electric power to the second coil portion wound around the second iron core portion and the third coil portion of each of the two electromagnetic units, based on the variation amount in the width direction of the conveyance cart when the conveyance cart passes through a curve in the conveyance route.

The guide unit includes a first guide wheel which is pivotally supported by the holding member to be positioned above the guide rail, and is brought in sliding contact with a top of the guide rail when the conveyance cart moves downward, to prevent deviation in the guide rail in the guide unit.

The guide unit includes a pair of second guide wheels which are pivotally supported by the holding member to be positioned on sides of the guide rail, and are brought in sliding contact with sides of the guide rail when the conveyance cart moves in the width direction, to prevent the core of the electromagnetic unit from contacting the guide rail.

The guide rail is a pair of traveling rails arranged along the conveyance route, and the guide unit is pivotally supported on both end portions of the support member corresponding to each traveling rail of the pair of traveling rails.

An external cross-sectional shape of the guide rail is a round shape or an ellipse shape, a surface facing the guide rail surface of the first iron core portion in a non-contact manner forms a recessed surface at a curvature which is substantially equal to a curvature of a facing guide rail surface, a surface facing the guide rail surface of the second iron core portion in a non-contact manner forms a recessed surface at a curvature which is substantially equal to a curvature of a facing guide rail surface, and a surface facing the guide rail surface of the third iron core portion in a non-contact manner forms a recessed surface at a curvature which is substantially equal to a curvature of a facing guide rail surface.

### Advantageous Effects of Invention

According to the present invention, a mobile body can be stably moved along the guide rail in a state in which the mobile body is levitated, without requiring a large quantity of power supply.

### Brief Description of Drawings

Fig. 1 is a top view illustrating an example of a sorting conveyor according to the present embodiment.
Fig. 2 is a front view of a conveyance cart used for the sorting conveyor illustrated in Fig. 1.
Fig. 3 is a top view of the conveyance cart illustrated in Fig. 2.
Fig. 4 is a side view of the conveyance cart illustrated in Fig. 2.
Fig. 5 is an exploded perspective view illustrating an example of a configuration of a guide unit.
Fig. 6 is a diagram illustrating an example of magnetic circuits of a bias flux generated by a permanent magnet in a magnetic levitation unit.
Fig. 7(a) is a diagram illustrating an example of magnetic circuits when a positive control current is supplied to a coil portion wound around a first iron core portion, and Fig. 7(b) is a diagram illustrating an example of magnetic circuits when a negative control current is supplied to a coil portion wounded around a second iron core portion, and a positive control current is supplied to a coil portion wound around a third iron core portion.
Fig. 8 is a functional block diagram illustrating a configuration of a system for controlling the magnetic levitation unit.
Fig. 9 is a flowchart illustrating an example of a flow of how the magnetic levitation unit is controlled.
Fig. 10(a) is a diagram illustrating a flow of a magnetic flux generated in an electromagnetic unit when the conveyance cart travels on a curve curved to the right, Fig. 10(b) is a diagram illustrating a flow of a magnetic flux generated in the electromagnetic unit when the conveyance cart travels on a curve curved to the left, and Fig. 10(c) is a diagram illustrating a flow of a magnetic flux generated in the electromagnetic unit when the conveyance cart sinks downward.

### Description of Embodiments of the Disclosure

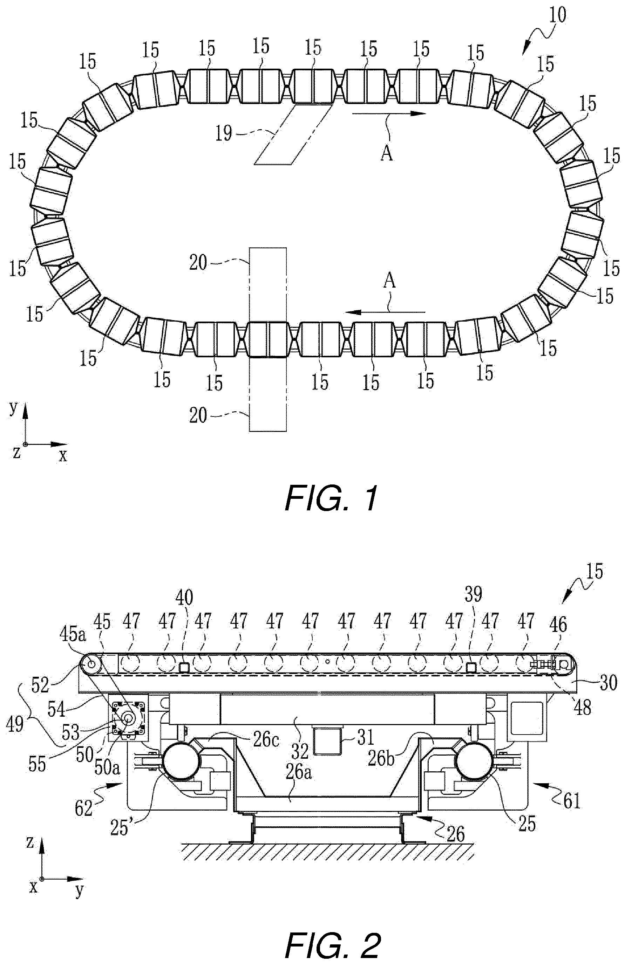

Hereinafter, the present embodiment will be described. Fig. 1 is a top view illustrating an example of a sorting conveyor 10. The sorting conveyor 10 of the present embodiment causes a large number of conveyance carts 15 to travel along a loop-shaped conveyance route, the conveyance carts 15 being connected in an endless manner.

A pair of traveling rails 25 and 25' (see Fig. 2) are provided in the loop-shaped conveyance route. The pair of traveling rails 25 and 25' each are a member restricting a traveling direction of each of the conveyance carts 15 connected to one another. Each rail of the pair of traveling rails 25 and 25' is a member formed in a hollow round pipe shape and made of a ferromagnetic material, and its cross-sectional shape may include not only a round shape but also an ellipse shape. The ferromagnetic material is a substance that is highly susceptible to magnetization, in which the magnetic moments of free electrons in the metal such as iron, cobalt, or nickel are aligned in parallel to one another by a magnetic exchange interaction, to form spontaneous magnetization. As illustrated in Fig. 2, the pair of traveling rails 25 and 25' are fixed to a rail holding member 26 provided in the conveyance route in a state in which the rails are arranged with a certain interval therebetween in an extending direction thereof. The rail holding member 26 includes a base 26a fixed to the conveyance route, and hanging portions 26b and 26c provided at both end portions in a longitudinal direction (a width direction of the conveyance route) of the base 26a, respectively. Of the pair of traveling rails 25 and 25', the traveling rail 25 is held in a suspended state by the hanging portion 26b, and the traveling rail 25' is held in a suspended state by the hanging portion 26c.

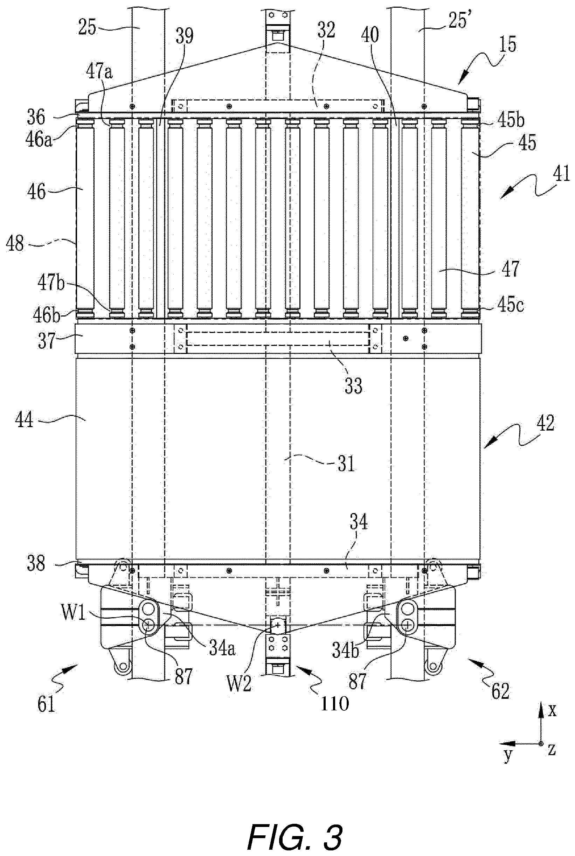

Returning to Fig. 1, the sorting conveyor 10 is driven by a drive device (not illustrated) provided at a predetermined position of the conveyance route and between the rails of the pair of traveling rails. In an example, the drive device is a friction-drive motive drive device. Although the details are not illustrated, the friction-drive motive drive device is a drive device including a pair of friction belts to be pressed against both side surfaces of a beam-shaped link 31(see Fig. 2 or Fig. 3) of the conveyance cart 15, a large number of friction rollers configured to press forward-side portions of the pair of friction belts in a direction of pressing the friction belts against the side surfaces of the beam-shaped link 31 of the conveyance cart 15, and a pair of motors with a speed reducer provided to the respective pair of friction belts.

The sorting conveyor 10 causes each conveyance cart 15 to travel in a clockwise direction in Fig. 1 (a direction A in Fig. 1) while driving. In the process in which each conveyance cart 15 moves in the direction A in Fig. 1, a conveyance object that is transferred by a loading conveyor 19 positioned inside the conveyance route is passed to each conveyance cart 15, and is placed on a conveyor unit for a cross sorter of the conveyance cart 15. Even after the conveyance object is placed on the conveyor unit for a cross sorter of the conveyance cart 15, the conveyance cart 15 moves in the direction A in Fig. 1. Then, when the conveyance cart 15 moves to a predetermined position, the conveyor unit for a cross sorter is driven and the conveyance object is passed from the conveyance cart 15 to a conveyance conveyor (a discharge conveyor) 20. Note that, in Fig. 1, the loading conveyor 19 from which the conveyance object can be delivered to each of the conveyance carts 15 or the conveyance conveyor 20 to which the conveyance object can be passed from the conveyance cart 15 is merely disclosed as an example. The positions of the loading conveyor 19 and the conveyance conveyor 20 are set appropriately.

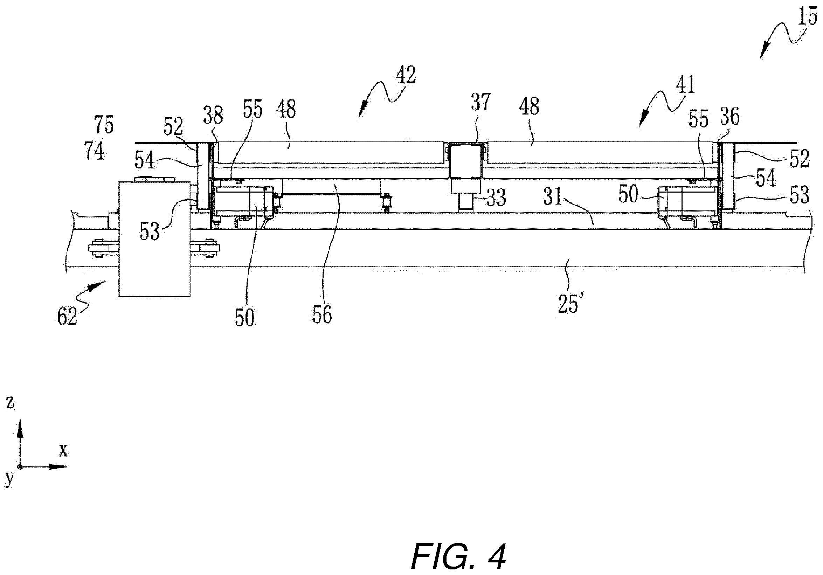

Hereinafter, a configuration of the conveyance cart 15 will be described with reference to Figs 2 to 4. In the present embodiment, there will be described the case where as the conveyor unit for a cross sorter provided in the conveyance cart 15, two belt conveyor units 41 and 42 (will be described later) are arranged side by side in the traveling direction of the conveyance cart 15. However, the number of belt conveyor units to be used as the conveyor unit for a cross sorter may also be one.

The conveyance cart 15 includes, as a chassis portion serving as a framework, the beam-shaped link 31 whose longitudinal direction is aligned with the traveling direction of the conveyance cart 15, and three support cross members 32, 33, and 34 that are arranged side by side with a predetermined interval therebetween in a direction perpendicular to the longitudinal direction of the beam-shaped link 31.

The beam-shaped link 31 is a member that is formed in a substantially square shape in a cross section perpendicular to the longitudinal direction and is made of a hollow metal material. The beam-shaped link 31 is positioned as a piece of a chain of a large conveyance loop, while serving as the framework in the traveling direction of the conveyance cart 15 in the conveyance route of the conveyance cart 15. The beam-shaped link 31 is a member whose side surfaces accept the forward-side portions of the pair of friction belts of the above-described friction-drive motive drive device.

Each of the three support cross members 32, 33, and 34 is a member which is formed in a substantially rectangular shape having long sides in an up-down direction in a cross section perpendicular to the longitudinal direction, and is made of a hollow metal material. Among the three support cross members 32, 33 and 34, the support cross member 32 holds a side frame 36 on an upper surface thereof, the support cross member 33 holds a center frame 37 on an upper surface thereof, and the support cross member 34 holds a side frame 38 on an upper surface thereof. Between the side frame 36 and the center frame 37, support members 39 and 40 are arranged with a predetermined interval therebetween. Although not illustrated, also between the center frame 37 and the side frame 38, the support members are arranged with a predetermined interval therebetween.

In the belt conveyor unit 41, the side frame 36 and the center frame 37 are arranged, as its own frames, at a gap portion formed between the side frame 36 and the center frame 37. In addition, in the belt conveyor unit 42, the center frame 37 and the side frame 38 are arranged, as its own frames, at a gap portion formed between the center frame 37 and the side frame 38. The belt conveyor units 41 and 42 have the same configuration. Accordingly, hereinafter the configuration of only the belt conveyor unit 41 will be described, and the description of the configuration of the belt conveyor unit 42 is omitted.

The belt conveyor unit 41 includes a drive pulley 45, a driven pulley 46, a plurality of rollers 47, an endless belt 48, a transmission mechanism 49, and a drive motor 50, in addition to the frames. Here, the drive pulley 45, the driven pulley 46, and the plurality of rollers 47 are arranged so that tops of the pulleys and rollers are positioned on the same horizontal plane. In the present embodiment, there will be described the case where the plurality of rollers 47 are provided between the drive pulley 45 and the driven pulley 46, as members for supporting an upper portion of the endless belt 48 (a portion on which a conveyance object is to be placed) from below. However, instead of providing the plurality of rollers 47, a support plate may also be provided between the drive pulley 45 and the driven pulley 46.

In the gap portion between the side frame 36 and the center frame 37, the drive pulley 45 is arranged at a right end portion in a y direction in Fig. 3. One end portion 45a of a rotation shaft of the drive pulley 45 protrudes from the side frame 36. A toothed pulley (sprocket) 52 constituting the transmission mechanism 49 is fixed to the one end portion 45a of the rotation shaft protruding from the side frame 36. An endless drive timing belt 54 is wound on the toothed pulley 52 of the drive pulley 45. The drive pulley 45 has V-grooves 45b and 45c formed at both end portions, so that protrusions of the endless belt 48 forming the conveyance surface are adapted to engage with the V-grooves 45b and 45c.

In the gap portion between the side frame 36 and the center frame 37, the driven pulley 46 is arranged at a left end portion in the y direction in Fig. 3. Similar to the drive pulley 45, the driven pulley 46 has V-grooves 46a and 46b with which protrusions of the endless belt 48 are adapted to engage, the V-grooves 46a and 46b being formed at both end portions in the longitudinal direction of the roller portion on which the endless belt 48 is to be wound. The plurality of rollers 47 are arranged between the drive pulley 45 and the driven pulley 46. In addition, each of the plurality of rollers 47 has V-grooves 47a and 47b with which protrusions of the endless belt 48 are adapted to engage, the V-grooves 47a and 47b being formed at both end portions in the longitudinal direction of the roller portion with which an inner surface of the endless belt 48 is brought in sliding contact.

The endless belt 48 is provided with the protrusions (not illustrated) at both end portions in the width direction of the belt and over the entire circumference of the inner surface of the belt. When the endless belt 48 is wound on the drive pulley 45 and the driven pulley 46, these protrusions enter the V-grooves provided in each pulley and each roller. This can prevent the endless belt 48 from meandering while the endless belt 48 is traveling.

The transmission mechanism 49 includes the two toothed pulleys 52 and 53 and the drive timing belt 54. Of the two toothed pulleys 52 and 53, the toothed pulley 52 is fixed to the one end portion 45a of the rotation shaft of the drive pulley 45, the one end portion 45a protruding from the side frame 36. The toothed pulley 53 is fixed to a rotation shaft 50a of the drive motor 50. The drive timing belt 54 is wound on the two toothed pulleys 52 and 53. Accordingly, in the transmission mechanism 49, the toothed pulley 53 to be fixed to the rotation shaft 50a of the drive motor 50 serves as a driving pulley, and the toothed pulley 52 to be fixed to the one end portion 45a of the rotation shaft of the drive pulley 45, the one end portion 45a protruding from the side frame 36, serves as a driven pulley.

The drive motor 50 is fixed to the side frame 36 via a bracket 55. As the drive motor 50, a servo motor is used, for example. For example, the drive motor 50 is electrically connected to the controller unit 56 held between the center frame 37 and the side frame 38 and on the upper surface of the beam-shaped link 31, as the power supply and the control signal communication from the controller unit 56.

In the above-described conveyance cart 15, a guide unit (corresponding to a guide mechanism recited in claims) 61 is pivotally supported on a supporting portion 34a provided at one end portion on the traveling rail 25 side of both end portions of the support cross member 34 in the width direction of the conveyance cart 15, and a guide unit (corresponding to a guide mechanism recited in claims) 62 is pivotally supported on a supporting portion 34b provided at the other end portion on the traveling rail 25' side. Note that the guide units 61 and 62 have the same configuration. Accordingly, hereinafter, only the guide unit 61 will be described.

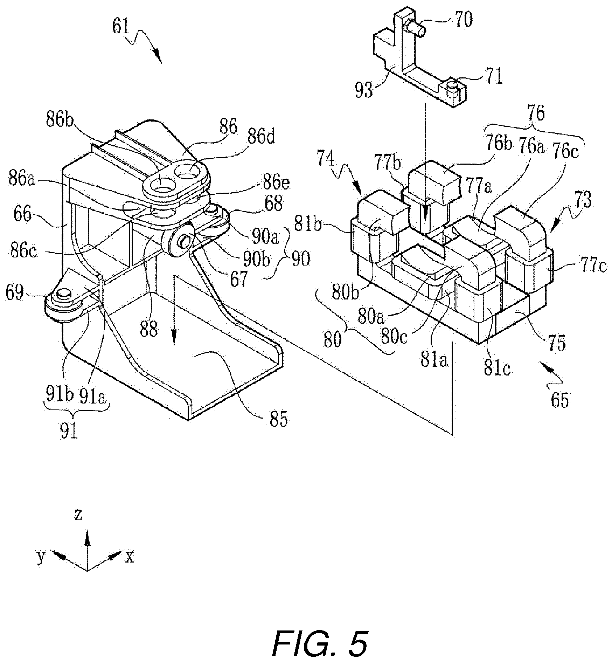

As illustrated in Fig. 5, the guide unit 61 includes a magnetic levitation unit 65, a holder (corresponding to a holding member recited in claims) 66, guide rollers 67, 68 and 69, a Y-axis sensor (corresponding to a first distance sensor recited in claims) 70, and a Z-axis sensor (corresponding to a second distance sensor recited in claims) 71. The guide unit 61 is configured to guide the traveling conveyance cart 15 along the traveling rail 25 and in a non-contact manner with respect to the traveling rail 25, using magnetic fluxes generated by the magnetic levitation unit 65.

The magnetic levitation unit 65 includes two electromagnetic units 73 and 74, and a permanent magnet 75, and the electromagnetic unit 73, the permanent magnet 75, and the electromagnetic unit 74 are arranged in this order from the traveling direction of the conveyance cart 15, so that the permanent magnet 75 is held between the two electromagnetic units 73 and 74. The electromagnetic unit 73 includes a substantially E-shaped core 76, and coil portions 77a, 77b, and 77c which are to be wound around respective three iron core portions 76a, 76b, and 76c in the core 76. The material of the core 76 is pure iron. Note that the material of the core 76 is pure iron, but may be ferromagnetic such as cobalt or nickel.

The core 76 of the electromagnetic unit 73 includes the first iron core portion 76a which protrudes upward from a center in the longitudinal direction of the core 76, and the second iron core portion 76b and the third iron core portion 76c which protrude upward from both end portions in the longitudinal direction of the core 76, respectively, and are curved so that the respective distal end surfaces face each other.

The first iron core portion 76a is arranged below the traveling rail 25, and attracts the traveling rail 25 within a magnetic field produced by the permanent magnet 75. The second iron core portion 76b is arranged outside the traveling rail 25, and attracts the traveling rail 25 within the magnetic field produced by the permanent magnet 75. The third iron core portion 76c is arranged inside the traveling rail 25, and attracts the traveling rail 25 within the magnetic field produced by the permanent magnet 75.

Here, each of the distal end surfaces (not illustrated) of the first iron core portion 76a, the second iron core portion 76b, and the third iron core portion 76c is a circular arc shaped curved surface along an outer peripheral surface of the traveling rail 25. An interval between the above-described second iron core portion 76b and third iron core portion 76c is an interval greater than an outer diameter of the traveling rail 25, for example.

The coil portions 77a, 77b, and 77c each are formed by winding an electric wire such as a polyurethane copper wire, a polyester copper wire, or a polyesterimide copper wire by a predetermined number of turns. The coil portion 77a is wound around the first iron core portion 76a, and the current is caused to flow through the coil portion 77a, so that the magnetic flux density between the first iron core portion 76a and the traveling rail 25 is changed. The coil portion 77b is wound around the second iron core portion 76b, and the current is caused to flow through the coil portion 77b, so that the magnetic flux density between the second iron core portion 76b and the traveling rail 25 is changed. The coil portion 77c is wound around the third iron core portion 76c, and the current is caused to flow through the coil portion 77c, so that the magnetic flux density between the third iron core portion 76c and the traveling rail 25 is changed. The number of turns of the electric wire in each of the coil portions 77a, 77b. and 77c is 100 turns, as an example. Note that the number of turns of the electric wire to be wound around each iron core portion is set according to the weight of the conveyance cart 15, the weight of the conveyance object to be placed on the conveyance cart 15, or the intensity of the magnetic force of the permanent magnet 75.

Similar to the electromagnetic unit 73, the electromagnetic unit 74 includes a substantially E-shaped core 80, and coil portions 81a, 81b, and 81c which are to be wound around respective three iron core portions 80a, 80b, and 80c in the core 80. Note that since the configuration of the electromagnetic unit 74 is the same as that of the electromagnetic unit 73, the description of the electromagnetic unit 74 is omitted here.

The permanent magnet 75 forms a magnetic circuit between the core 76 of the electromagnetic unit 73 and the core 80 of the electromagnetic unit 74. The magnetic circuit based on the magnetic field produced by the permanent magnet 75 and the magnetic circuits based on the magnetic fields produced by the electromagnetic units 73 and 74 will be described later.

A holder 66 is a member formed in a U-shape when viewed from the front side or the rear side of the conveyance cart 15. The holder 66 includes a holding portion 85, and a shaft support portion 86. The holding portion 85 is provided in a lower portion of the holder 66, and is configured to fix and hold the above-described magnetic levitation unit 65. The shaft support portion 86 is provided above the holding portion 85. The shaft support portion 86 has an insertion space 86a into which the supporting portion 34a of the support cross member 34 is to be inserted on a distal end side thereof, and is pivotally supported using a rotation shaft 87 (see Fig. 3) or the like in a state in which the supporting portion 34a of the support cross member 34 is inserted into the insertion space 86a. Here, when the holder 66 is pivotally supported on the supporting portion 34a of the support cross member 34, a center position W1 of the rotation shaft 87 in the traveling direction of the conveyance cart 15 is provided at the same position as a rotation center position W2 of a connection mechanism 110 connected with a conveyance cart 15 located in the subsequent stage. Note that reference numerals 86b, 86c, 86d, and 86e each denote an insertion hole into which the rotation shaft 87 is to be inserted. The insertion hole 86b and the insertion hole 86c are arranged to be coaxial with each other in the z-axis direction in Fig. 5, and the insertion hole 86d and the insertion hole 86e are arranged to be coaxial with each other in the z-axis direction in Fig. 5. Note that the rotation shaft 87 is inserted over the insertion hole 86b and the insertion hole 86c or over the insertion hole 86d and the insertion hole 86e.

A support column 88 protruding forward from the back surface is provided between the holding portion 85 and the shaft support portion 86. The support column 88 pivotally supports the guide roller 67 with a bearing, for example.

The holder 66 has shaft support portions 90 and 91 formed on both side surfaces thereof, respectively. The shaft support portion 90 has two tongues 90a and 90b that are arranged with a predetermined interval in the up-down direction. The shaft support portion 90 pivotally supports the guide roller 68 with a bearing, for example, in a state in which the guide roller 68 is inserted between the tongues 90a and 90b.

Similarly, the shaft support portion 91 has two tongues 91a and 91b that are arranged with a predetermined interval in the up-down direction. The shaft support portion 91 pivotally supports the guide roller 69 with a bearing, for example, in a state in which the guide roller 69 is inserted between the tongues 91a and 91b.

The guide roller 67 is pivotally supported on the support column 88 of the holder 66. The guide roller 67 is arranged at a position separated from the top of the traveling rail 25 during normal traveling of the conveyance cart 15. When the conveyance cart 15 moves downward, the guide roller 67 is brought in sliding contact with the top of the traveling rail, which prevents the traveling rail 25 from deviating from the guide unit 61.

The guide roller 68 is pivotally supported on a shaft support portion 90 of the holder 66. The guide roller 68 is arranged at a position separated from the side of the traveling rail 25 during normal traveling of the conveyance cart 15. While the conveyance cart 15 is traveling, the guide roller 68 is brought in sliding contact with the side of the traveling rail 25 when the conveyance cart 15 deviates in the width direction, which prevents the second iron core portion 76b or the third iron core portion 76c of the core 76 of the electromagnetic unit 73 and the second iron core portion 80b or the third iron core portion 80c of the core 80 of the electromagnetic unit 74 from contacting the traveling rail 25. Note that a distance between the guide roller 68 and the traveling rail 25 is set to be shorter than a distance between the traveling rail and the second iron core portion 76b or the third iron core portion 76c of the core 76 of the electromagnetic unit 73 (will be described later), and a distance between the traveling rail and the second iron core portion 80b or the third iron core portion 80c of the core 80 of the electromagnetic unit 74.

The guide roller 69 is pivotally supported on a shaft support portion 91 of the holder 66. Similar to the guide roller 68, the guide roller 69 is arranged at a position separated from the side of the traveling rail 25 during normal traveling of the conveyance cart 15. While the conveyance cart 15 is traveling, the guide roller 69 is brought in sliding contact with the side of the traveling rail 25 when the conveyance cart 15 deviates in the width direction, which prevents the second iron core portion 76b or the third iron core portion 76c of the core 76 of the electromagnetic unit 73 and the second iron core portion 80b or the third iron core portion 80c of the core 80 of the electromagnetic unit 74 from contacting the traveling rail 25. Note that a distance between the guide roller 69 and the traveling rail 25 is set to be shorter than a distance between the traveling rail and the second iron core portion 76b or the third iron core portion 76c of the core 76 of the electromagnetic unit 73 (will be described later), and a distance between the traveling rail and the second iron core portion 80b or the third iron core portion 80c of the core 80 of the electromagnetic unit 74.

A Y-axis sensor 70 is detection means for detecting a change in relative positions of the traveling rail 25 and the magnetic levitation unit 65 in the width direction (the y direction or -y direction in Fig. 5) of the conveyance cart 15. A Z-axis sensor 71 is detection means for detecting a change in relative positions of the traveling rail 25 and the magnetic levitation unit 65 in the up-down direction (the z direction or -z direction in Fig. 5) of the conveyance cart 15. These sensors are fixed to a holder 93 formed in a substantially L-shape. Note that the holder 93 is fixed to the holder 66 to be positioned on an upper surface of the permanent magnet 75.

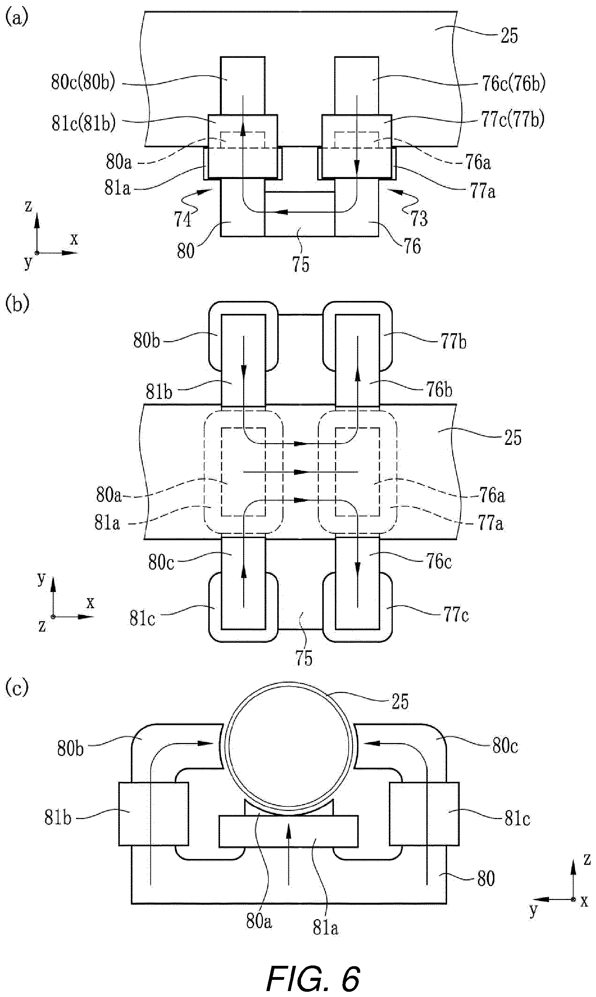

Hereinafter, actions in the magnetic levitation unit 65 will be described. Firstly, the magnetic circuits of the magnetic flux (a bias flux) generated by the permanent magnet 75 will be described with reference to Fig. 6. Hereinafter, the case where the direction of the magnetic flux generated by the permanent magnet 75 is a -x direction in Fig. 6 will be described as an example. Note that Fig. 6(a) indicates a direction of the bias flux in an x-z plane, Fig. 6(b) indicates directions of the bias fluxes in an x-y plane, and Fig. 6(c) indicates directions of the bias fluxes in a y-z plane.

As illustrated in Figs. 6(a) to 6(c), the bias flux generated by the permanent magnet 75 enters the core 80 of the electromagnetic unit 74 from the permanent magnet 75. For example, a magnetic circuit of a magnetic loop (a first closed loop recited in claims) is formed in which the bias flux that enters a first iron core portion 80a of the core 80 of the electromagnetic unit 74 enters the traveling rail 25 from the distal end surface (a magnetic action surface) of the first iron core portion 80a via an air gap between the magnetic action surface and the outer peripheral surface of the traveling rail 25, and enters the first iron core portion 76a of the core 76 of the electromagnetic unit 73 from the traveling rail 25 via an air gap between the outer peripheral surface of the traveling rail 25 and the distal end surface (the magnetic action surface) of the first iron core portion 76a of the core 76 of the electromagnetic unit 73, and thereafter returns to the permanent magnet 75.

Similarly, a magnetic circuit of a magnetic loop (a second closed loop recited in claims) is formed in which the bias flux that enters a second iron core portion 80b of the core 80 of the electromagnetic unit 74 enters the traveling rail 25 from the distal end surface (a magnetic action surface) of the second iron core portion 80b via an air gap between the magnetic action surface and the outer peripheral surface of the traveling rail 25, and enters the second iron core portion 76b of the core 76 of the electromagnetic unit 73 from the traveling rail 25 via an air gap between the outer peripheral surface of the traveling rail 25 and the distal end surface (the magnetic action surface) of the second iron core portion 76b of the core 76 of the electromagnetic unit 73, and thereafter returns to the permanent magnet 75.

In addition, a magnetic circuit of a magnetic loop (a third closed loop recited in claims) is formed in which the bias flux that enters a third iron core portion 80c of the core 80 of the electromagnetic unit 74 enters the traveling rail 25 from the distal end surface (a magnetic action surface) of the third iron core portion 80c via an air gap between the magnetic action surface and the outer peripheral surface of the traveling rail 25, and enters the third iron core portion 76c of the core 76 of the electromagnetic unit 73 from the traveling rail 25 via an air gap between the outer peripheral surface of the traveling rail 25 and the distal end surface (the magnetic action surface) of the third iron core portion 76c of the core 76 of the electromagnetic unit 73, and thereafter returns to the permanent magnet 75.

That is, in the magnetic levitation unit 65, the magnetic circuits are formed in which the bias flux generated by the permanent magnet 75 enters the traveling rail 25 through each of the iron core portions 80a, 80b, and 80c of the core 80 of the electromagnetic unit 74, and thereafter returns from the traveling rail 25 to the permanent magnet 75 through each of the iron core portions 76a, 76b, and 76c of the core 76 of the electromagnetic unit 73.

Note that in the case where the direction of the magnetic flux generated by the permanent magnet 75 is the x direction in Fig. 6, the magnetic circuits are formed in which the bias flux generated by the permanent magnet 75 enters the traveling rail 25 through each of the iron core portions 76a, 76b, and 76c of the core 76 of the electromagnetic unit 73, and thereafter returns from the traveling rail 25 to the permanent magnet 75 through each of the iron core portions 80a, 80b, and 80c of the core 80 of the electromagnetic unit 74.

Next, the magnetic fluxes which act when the current is supplied to the coil portions of the electromagnetic units 73 and 74 will be described. Hereinafter, there will be described the case where the current is supplied to the electromagnetic unit 73. The current to be supplied to the electromagnetic unit 73 is referred to as a control current, and the magnetic flux generated when the control current is supplied is referred to as a control flux. Furthermore, the control current when the control flux is generated which acts in the same direction as that of the magnetic flux generated by the permanent magnet 75 is referred to as a positive control current, and the control current when the control flux is generated which acts in a direction opposite to that of the magnetic flux generated by the permanent magnet 75 is referred to as a negative control current.

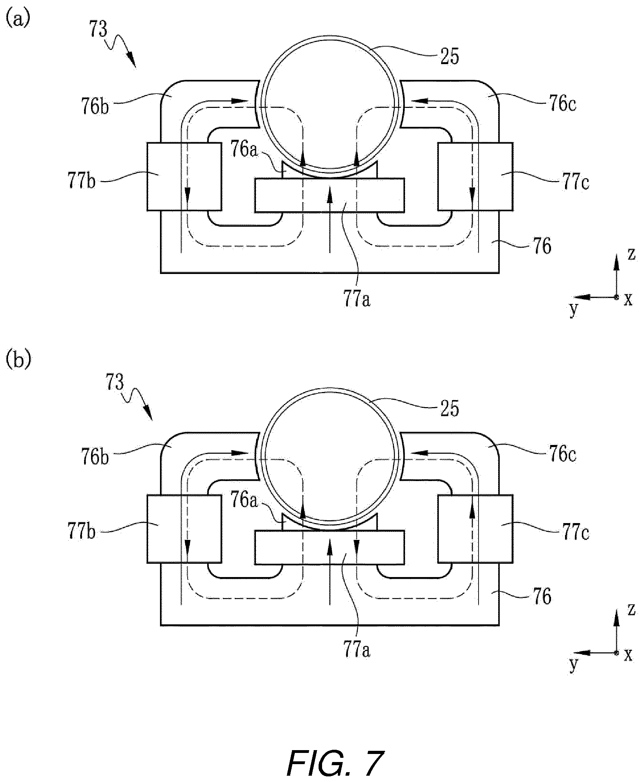

Firstly, the case where the control fluxes which act in the up-down direction is generated will be described with reference to Fig. 7(a). In Fig. 7(a), the direction of the bias flux is indicated by a solid line, and the direction of the control flux is indicated by a dotted line.

As described above, the direction of the magnetic flux in the first iron core portion 76a is a direction of the bias flux generated by the permanent magnet 75, i.e., an upward direction (the z-direction in Fig. 7(a)).

For example, when the positive control current is supplied to the coil portion 77a wound around the first iron core portion 76a of the core 76 of the electromagnetic unit 73, the magnetic circuits are formed in which the control flux generated in the first iron core portion 76a enters the traveling rail 25 from the first iron core portion 76a, and enters each of the second iron core portion 76b and the third iron core portion 76c. That is, when the positive control current is supplied, in the first iron core portion 76a, the control flux acts in the same direction as that of the bias flux generated by the power supply to the coil portion 77a, in addition to the bias flux generated by the permanent magnet 75. Accordingly, the magnetic flux density between the first iron core portion 76a and the traveling rail 25 increases, and an attraction force of the traveling rail 25 in the first iron core portion 76a increases, that is, since the traveling rail is fixed without movement, a force (hereinafter, referred to as a support force) for raising and supporting the conveyance cart side in a non-contact manner increases.

Although not illustrated, when the negative control current is supplied to the coil portion 77a wound around the first iron core portion 76a of the core 76 of the electromagnetic unit 73, a control flux in a downward direction (a -z direction in Fig. 7(a)) is generated in the first iron core portion 76a. This control flux enters each of the second iron core portion 76b and the third iron core portion 76c from the first iron core portion 76a, and thereafter moves to the first iron core portion 76a via each of an air gap between the second iron core portion 76b and the traveling rail 25 and an air gap between the third iron core portion 76c and the traveling rail 25. That is, when the negative control current is supplied, in the first iron core portion 76a, the control flux acts in a direction opposite to that of the bias flux generated by the power supply to the coil portion 77a, in addition to the bias flux generated by the permanent magnet 75. Accordingly, the magnetic flux density between the first iron core portion 76a and the traveling rail 25 decreases, and the support force from the traveling rail 25 by the first iron core portion 76a decreases.

As described above, when the positive control current or the negative control current is supplied to the coil portion 77a wound around the first iron core portion 76a, the magnetic flux acts between the second iron core portion 76b and the traveling rail 25, and the magnetic flux acts between the third iron core portion 76c and the traveling rail 25, so that these magnetic fluxes act to cancel out each other. Accordingly, when the control current is supplied to the coil portion 77a wound around the first iron core portion 76a, the magnetic flux between the second iron core portion 76b and the traveling rail 25 and the magnetic flux between the third iron core portion 76c and the traveling rail 25 do not affect the up-down direction (the z direction or -z direction in Fig. 7(a)).

Next, the case where the control fluxes which act in the left-right direction are generated will be described. As illustrated Fig. 7(b), a magnetic circuit is formed in which the bias flux generated by the permanent magnet 75 enters the traveling rail 25 from the second iron core portion 76b of the core 76 of the electromagnetic unit 73 via the air gap. In addition, a magnetic circuit is formed in which the bias flux generated by the permanent magnet 75 enters the traveling rail 25 from the third iron core portion 76c of the core 76 of the electromagnetic unit 73 via the air gap.

At this time, the bias flux flowing from the first iron core portion 76a to the traveling rail 25 and the bias flux flowing from the second iron core portion 76b to the traveling rail 25 are magnetic fluxes flowing in opposite directions to each other. On the other hand, the bias flux flowing from the first iron core portion 76a to the traveling rail 25 and the bias flux flowing from the third iron core portion 76c to the traveling rail 25 are magnetic fluxes flowing in the same direction. Accordingly, the bias flux flowing from the second iron core portion 76b to the traveling rail 25 and the bias flux flowing from the third iron core portion 76c to the traveling rail 25 act to cancel out each other.

For example, the negative control current is caused to flow through the coil portion 77b wound around the second iron core portion 76b, to generate the control flux that acts in the direction opposite to that of the bias flux. At the same time, the positive control current is caused to flow through the coil portion 77c wound around the third iron core portion 76c, to generate the control flux that acts in the same direction as that of the bias flux.

At this time, a magnetic circuit is formed in which the control flux generated by causing the negative control current to flow through the coil portion 77b wound around the second iron core portion 76b enters the traveling rail 25 via the second iron core portion 76b, the first iron core portion 76a, and an air gap between the first iron core portion 76a and the traveling rail 25, and enters the second iron core portion 76b via an air gap between the traveling rail 25 and the second iron core portion 76b. That is, in addition to the bias flux generated by the permanent magnet 75, the control flux in the direction (the y direction in Fig. 7(b)) opposite to that of the bias flux acts on the magnetic flux between the second iron core portion 76b and the traveling rail 25. As a result, the magnetic flux density between the second iron core portion 76b and the traveling rail 25 decreases, and the support force from the traveling rail 25 in the second iron core portion 76b decreases.

On the other hand, a magnetic circuit is formed in which the control flux generated by causing the positive control current to flow through the coil portion 77c wound around the third iron core portion 76c enters the traveling rail 25 via the third iron core portion 76c, and an air gap between the third iron core portion 76c and the traveling rail 25, and enters the first iron core portion 76a via an air gap between the traveling rail 25 and the first iron core portion 76a. That is, in addition to the bias flux generated by the permanent magnet 75, the control flux in the same direction as that of the bias flux (the y direction in Fig. 7(b)) acts on the magnetic flux between the third iron core portion 76c and the traveling rail 25. As a result, the magnetic flux density between the third iron core portion 76c and the traveling rail 25 increases, and the support force from the traveling rail 25 in the third iron core portion 76c increases.

As a result, the support force in the third iron core portion 76c is stronger than the support force in the second iron core portion 76b, and the electromagnetic unit 73 moves in a direction in which the third iron core portion 76c is attracted to the traveling rail 25.

Note that the control fluxes generated by the power supply to the coil portion 77b wound around the second iron core portion 76b and by the power supply to the coil portion 77c wound around the third iron core portion 76c act on each other in opposite directions between the first iron core portion 76a and the traveling rail 25 to cancel out each other. Accordingly, the control fluxes do not affect the up-down direction.

On the other hand, in the case where the positive control current is supplied to the coil portion 77b wound around the second iron core portion 76b and the negative control current is supplied to the coil portion 77c wound around the third iron core portion 76c, the magnetic flux density between the second iron core portion 76b and the traveling rail 25 increases, and the magnetic flux density between the third iron core portion 76c and the traveling rail 25 decreases. Accordingly, the support force in the second iron core portion 76b is stronger than the support force in the third iron core portion 76c, and the electromagnetic unit 73 moves in a direction in which the second iron core portion 76b is attracted to the traveling rail 25.

Also in this case, the control fluxes generated by the power supply to the coil portion 77b wound around the second iron core portion 76b and by the power supply to the coil portion 77c wound around the third iron core portion 76c act on each other in opposite directions between the first iron core portion 76a and the traveling rail 25 to cancel out each other. Accordingly, the control fluxes do not affect the up-down direction.

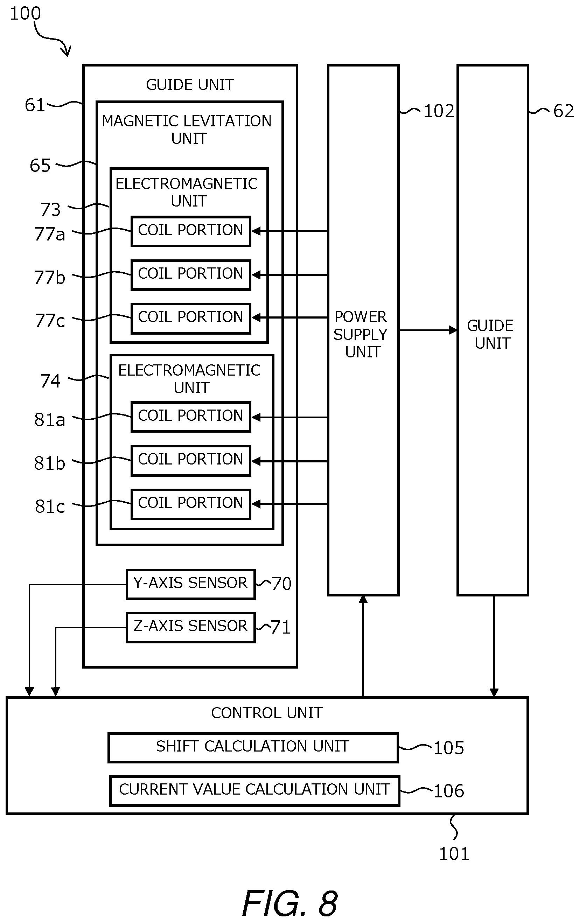

Next, an electric configuration about a system in which the control current is supplied to the guide units 61 and 62 will be described with reference to Fig. 8. Since, as described above, the guide units 61 and 62 have the same configuration, also in Fig. 8, only a configuration of the guide unit 61 will be described in detail. In Fig. 8, a configuration of controlling the travel of the conveyance cart and a configuration of driving the belt conveyor units 41 and 42 of the conveyance cart are not illustrated.

A system 100 for supplying a control current to the guide units 61 and 62 includes the guide unit 62, a control unit 101, and a power supply unit 102, in addition to the above-described guide unit 61.

The control unit 101 controls the power supply by adjusting the current to the guide units 61 and 62 with the power supply unit 102. The control unit 101 has functions of a shift calculation unit 105 and a current value calculation unit 106.

The shift calculation unit 105 obtains a shift amount H1 in the y-axis direction (the horizontal direction) on receipt of a detection signal from the Y-axis sensor 70. Note that the shift amount H1 is a variation amount from a reference value H0. For example, the reference value H0 refers to a distance from the Y-axis sensor 70 to the outer peripheral surface of the traveling rail 25 when the conveyance cart 15 is set on the conveyance route.

In addition, the shift calculation unit 105 obtains a shift amount V1 in the z-axis direction (the up-down direction) on receipt of a detection signal from the Z-axis sensor 71. Note that the shift amount V1 is a variation amount from a reference value V0. For example, the reference value V0 refers to a distance from the Z-axis sensor 71 to the outer peripheral surface of the traveling rail 25 when the conveyance cart 15 is set on the conveyance route.

The current value calculation unit 106 calculates a value of the current flowing the electromagnetic units 73 and 74 based on the shift amount H1 in the y-axis direction and the shift amount V1 in the z-axis direction that are obtained from the shift calculation unit 105. The information on the calculated current value is output to the power supply unit 102 together with the information on the coil portion through which the current is caused to flow.

The power supply unit 102 receives the information on the current value and the information on the coil portion through which the current is caused flow that are output from the control unit 101, and causes the current to flow toward the corresponding coil portions.

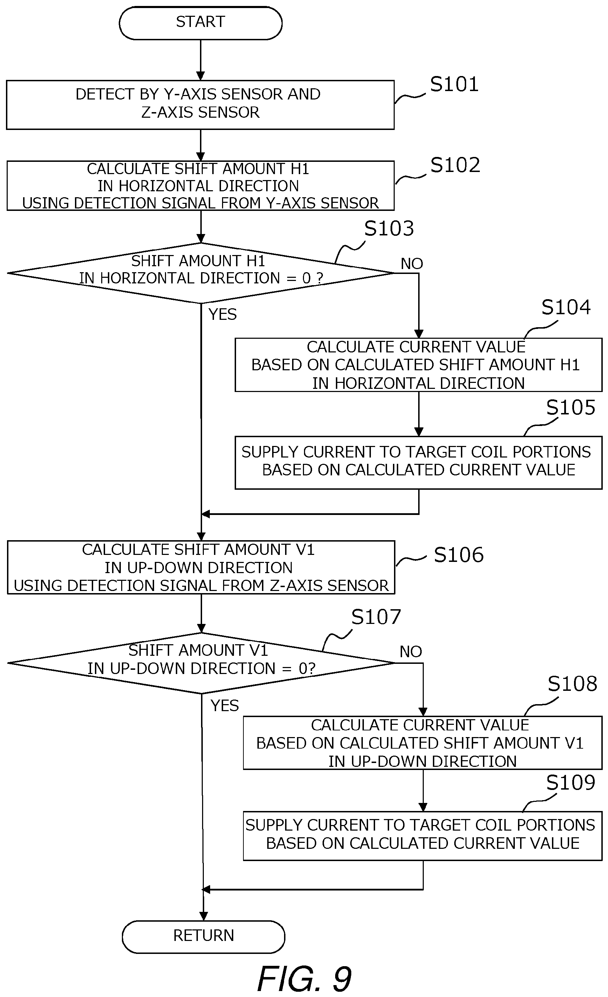

Next, the flow of control in the magnetic levitation unit 65 provided in the guide unit 61 will be described using a flowchart in Fig. 9. Note that the processes of the flowchart in Fig. 9 are performed while the conveyance cart 15 is traveling on the conveyance route. The processes of the flowchart in Fig. 9 represent the flow of control with respect to the magnetic levitation unit 65 in the guide unit 61, but a flow of control with respect to a magnetic levitation unit in the guide unit 62 is also the same as the above-described flow.

Step S101 is a process of making the detection with the Y-axis sensor and the Z-axis sensor. Distances to the traveling rail 25 in the left-right direction and the up-down direction of the conveyance cart 15 are detected by the Y-axis sensor 70 and the Z-axis sensor 71, respectively. Note that each of the Y-axis sensor 70 and the Z-axis sensor 71 outputs a detection signal to the control unit 101.

Step S102 is a process of calculating the shift amount H1 in the horizontal direction using the detection signal from the Y-axis sensor. The control unit 101 obtains the distance from the Y-axis sensor 70 to the traveling rail 25 based on the detection signal from the Y-axis sensor 70. The control unit 101 obtains a difference between a calculated value of the distance from the Y-axis sensor 70 to the traveling rail 25 and the reference value H0, as the shift amount H1 in the horizontal direction.

Step S103 is a process of determining whether the shift amount H1 in the horizontal direction is 0. When the shift amount H1 in the horizontal direction obtained in step S102 is 0, the control unit 101 determines the determination result as Yes in step S103. In this case, the process proceeds to step S106. On the other hand, when the shift amount H1 in the horizontal direction obtained in step S102 is not 0, the control unit 101 determines the determination result as No in step S103. In this case, the process proceeds to step S104.

Step S104 is a process of calculating a current value based on the calculated shift amount H1 in the horizontal direction. The control unit 101 calculates the current value to be supplied to the magnetic levitation unit 65 based on the shift amount in the horizontal direction which is obtained in step S102.

Step S105 is a process of supplying the current value to the magnetic levitation unit 65 based on the calculated current value. The control unit 101 outputs the information on the current value obtained in step S104 and the information on the target coil portions to the power supply unit 102. As a result, the power supply unit 102 causes the current to flow toward the target coil portions (in this case, the coil portions 77b and 77c of the electromagnetic unit 73, and the coil portions 81b and 81c of the electromagnetic unit 74). When the process in step S105 is completed, the process proceeds to step S106.

Step S106 is a process of calculating the shift amount V1 in the up-down direction using the detection signal from the Z-axis sensor. The control unit 101 obtains the distance from the Z-axis sensor 71 to the traveling rail 25 on receipt of the detection signal from the Z-axis sensor 71. The control unit 101 obtains a difference between a calculated value of the distance from the Z-axis sensor 71 to the traveling rail 25 and the reference value V0, as the shift amount V1 in the up-down direction.

Step S107 is a process of determining whether the shift amount V1 in the up-down direction is 0. When the shift amount in the up-down direction obtained in step S106 is 0, the control unit 101 determines the determination result as Yes in step S107. In this case, the process returns to step S101. On the other hand, when the shift amount V1 in the up-down direction obtained in step S106 is not 0, the control unit 101 determines the determination result as No in step S107. In this case, the process proceeds to step S108.

Step S108 is a process of calculating a current value based on the calculated shift amount V1 in the up-down direction. The control unit 101 calculates the current value to be supplied to the magnetic levitation unit 65 based on the shift amount V1 in the up-down direction which is obtained in step S106.

Step S109 is a process of supplying the current value to the magnetic levitation unit 65 based on the calculated current value. The control unit 101 outputs the information on the current value obtained in step S108 and the information on the target coil portions to the power supply unit 102. As a result, the power supply unit 102 causes the current to flow toward the target coil portions (in this case, the coil portion 77a of the electromagnetic unit 73, and the coil portion 81a of the electromagnetic unit 74). When the process in step S109 is completed, the process returns to step S101.

For example, when the traveling conveyance cart 15 passes through a curve, the conveyance cart 15 moves in a direction away from the center of the curve by a centrifugal force.

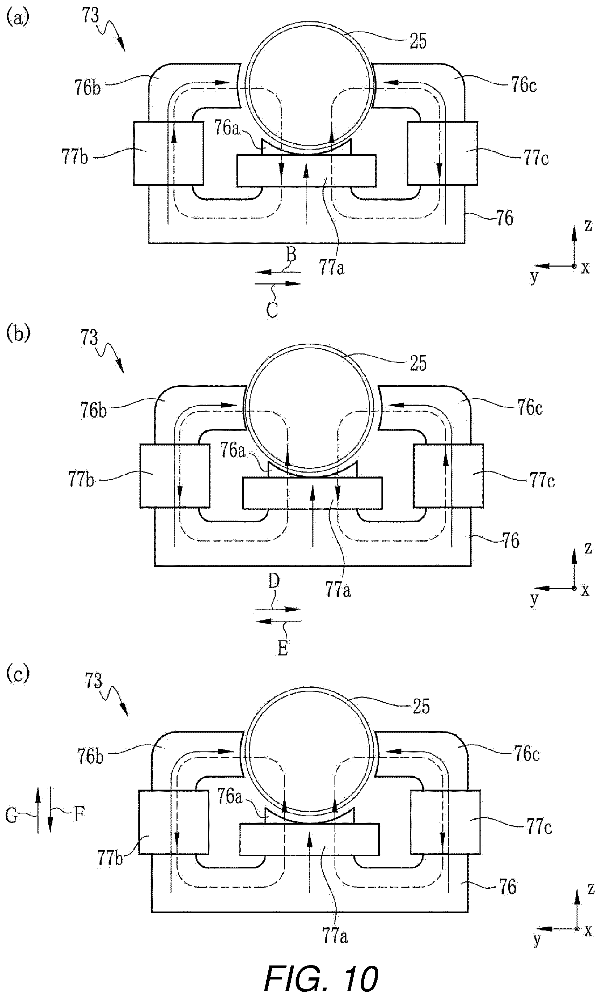

As illustrated in Fig. 10(a), for example, when the traveling conveyance cart 15 passes through a curve curved to the right, the electromagnetic unit 73 moves in a direction (a direction B in Fig. 10(a)) in which the centrifugal force acts, and therefore the distance from the Y-axis sensor 70 to the outer peripheral surface of the traveling rail 25 is wider than the reference value H0. Accordingly, the shift amount H1 in the horizontal direction based on the detection signal of the Y-axis sensor 70 is equal to or greater than 0.

In this case, the positive control current is supplied to the coil portion 77b wound around the second iron core portion 76b of the core 76 of the electromagnetic unit 73, and the negative control current is supplied to the coil portion 77c. When the positive control current is supplied to the coil portion 77b, the control flux in the same direction as the bias flux is generated in the second iron core portion 76b around which the coil portion 77b is wound. As a result, the magnetic flux density between the second iron core portion 76b and the traveling rail 25 increases, and the support force of the traveling rail 25 in the second iron core portion 76b increases. On the other hand, when the negative control current is supplied to the coil portion 77c, the control flux in the direction opposite to that of the bias flux is generated in the third iron core portion 76c around which the coil portion 77c is wound. As a result, the magnetic flux density between the third iron core portion 76c and the traveling rail 25 decreases, and the support force of the traveling rail 25 in the third iron core portion 76c decreases. Accordingly, the electromagnetic unit 73 moves in a direction C in Fig. 10(a) with respect to the traveling rail 25. When the electromagnetic unit 73 moves in the direction B in Fig. 10(a), the distance from the Y-axis sensor 70 to the outer peripheral surface of the traveling rail 25 is maintained at the reference value H0.

In addition, when the traveling conveyance cart passes through a curve curved to the left, the electromagnetic unit 73 moves in a direction D in Fig. 10(b), and therefore the distance from the Y-axis sensor 70 to the outer peripheral surface of the traveling rail 25 is narrower than the reference value H0. In this case, the negative control current is supplied to the coil portion 77b wound around the second iron core portion 76b of the core 76 of the electromagnetic unit 73, and the positive control current is supplied to the coil portion 77c. When the negative control current is supplied to the coil portion 77b, the control flux in the direction opposite to that of the bias flux is generated in the second iron core portion 76b around which the coil portion 77b is wound. As a result, the magnetic flux density between the second iron core portion 76b and the traveling rail 25 decreases, and the support force of the traveling rail 25 in the second iron core portion 76b decreases. On the other hand, when the positive control current is supplied to the coil portion 77c, the control flux in the same direction as the bias flux is generated in the third iron core portion 76c around which the coil portion 77c is wound. As a result, the magnetic flux density between the third iron core portion 76c and the traveling rail 25 increases, and the support force of the traveling rail 25 in the third iron core portion 76c increases. Accordingly, the electromagnetic unit 73 moves in a direction E in Fig. 10(b) with respect to the traveling rail 25. When the electromagnetic unit 73 moves in the direction E in Fig. 10(b), the distance from the Y-axis sensor 70 to the outer peripheral surface of the traveling rail 25 is maintained at the reference value H0.

In the case where a conveyance object is placed on the conveyance cart 15, the conveyance cart 15 moves downward (a direction F in Fig. 10(c)). That is, the distance from the Z-axis sensor 71 to the outer peripheral surface of the traveling rail 25 is wider than the reference value V0. In this case, the positive control current is supplied to the coil portion 77a wound around the first iron core portion 76a of the core 76 of the electromagnetic unit 73. When the positive control current is supplied to the coil portion 77a wound around the first iron core portion 76a of the core 76 of the electromagnetic unit 73, in the first iron core portion 76a, a bias flux and the control flux acts in the same direction as the bias flux. As a result, the magnetic flux density between the first iron core portion 76a and the traveling rail 25 increases, and the support force in the first iron core portion 76a increases. As a result, when the electromagnetic unit 73 moves in the direction G in Fig. 10(c), the distance from the Z-axis sensor 71 to the outer peripheral surface of the traveling rail 25 is maintained at the reference value V0.

In the present embodiment, when the conveyance cart 15 travels along the conveyance route, the conveyance cart 15 travels in a non-contact manner with respect to the traveling rail using a magnetic flux generated by the permanent magnet 75. For example, the conveyance object is sent onto the belt conveyor unit 41 or the belt conveyor unit 42 of the conveyance cart 15, and when the sent conveyance object is placed, the conveyance cart 15 sinks down due to a change in weight of the conveyance object placed thereon. Accordingly, the current value is supplied to the guide unit 61 according to the sinking amount of the conveyance cart 15, and therefore the current is supplied to the first coil portion 77a of the electromagnetic unit 73 in the guide unit 61 and the first coil portion 81a of the electromagnetic unit 74. Therefore, the attraction of the traveling rail 25 is performed by the first iron core portion 76a of the core 76 around which the first coil portion 77a is wound and the first iron core portion 80a of the core 80 around which the first coil portion 81a is wound, and the position adjustment for the traveling rail 25 is caused by the sinking of the conveyance cart 15 due to a change in weight of the conveyance object placed on the conveyance cart 15. At the same time, the same operation is also applied to the guide unit 62, and therefore the position adjustment for the traveling rail 25' is caused by the sinking of the conveyance cart 15 due to a change in weight of the conveyance object placed on the conveyance cart 15.

When the conveyance cart 15 travels along the conveyance route with a height difference, the position adjustment for the traveling rails 25 and 25' is performed in a similar manner even when the relative position in the up-down direction of the conveyance cart 15 with respect to the traveling rails 25 and 25' on the conveyance route is shifted.

Evan in the process in which the conveyance cart 15 passes through the curve provided in the conveyance rough while traveling, the position adjustment for the traveling rails 25 and 25' can be performed according to a position change due to the centrifugal force generated when the conveyance cart 15 passes through the curve.

Accordingly, in the process in which the conveyance cart 15 is traveling on the conveyance route, the conveyance cart 15 does not contact the traveling rails 25 and 25', and therefore, even when the conveyance cart 15 travels at a high speed, vibration or noise accompanied by the vibration can be prevented. Since the conveyance cart 15 can travel in a non-contact manner, it is not necessary to use a high-output power source as a power source for causing the conveyance cart to travel, and to arrange a large number of driving sources on the conveyance route.

In the conveyance cart 15, when only a magnetic field produced by the permanent magnet 75 is used, the current is supplied to the electromagnetic units 73 and 74 according to need of a load amount and a displacement amount. Accordingly, the power consumption for driving the sorting conveyor can be reduced.

In the present embodiment, according to the sinking of the conveyance cart 15 when the conveyance object is placed on any one of the belt conveyor unit 41 or the belt conveyor unit 42, the electric power is supplied to the first coil portion 77a wound around the first iron core portion 76a of the core 76 of the electromagnetic unit 73 and the electric power is supplied to the first coil portion 81a wound around the first iron core portion 80a of the core 80 of the electromagnetic unit 74. However, when the sinking amount when the sent conveyance object is placed on the belt conveyor unit is small, the power supply to the electromagnetic units 73 and 74 may be performed only during the period from when the belt conveyor unit on which the conveyance object is placed (sent) starts to be driven to when the conveyance object is placed on the conveyance surface of the belt conveyor unit.

In the present embodiment, there has been described the case where a plurality of conveyance carts connected in an annular manner travel along the conveyance route, but the present invention can also be applied to the case where a plurality of annular connections, each in which a plurality of conveyance carts are connected in series, travel along the conveyance route.

In the present embodiment, when each of the shift amount H1 in the horizontal direction and the shift amount V1 in the up-down direction is not 0, the current is supplied to the target coil portions, but when each of the shift amount H1 in the horizontal direction and the shift amount V1 in the up-down direction is beyond a predetermined range, the current can be supplied to the target coil portions.

### Reference Signs List

10 Sorting conveyor
15 Conveyance cart
61, 62 Guide unit
65 Magnetic levitation unit
66 Holder
67, 68, 69 Guide roller
70 Y-axis sensor
71 Z-axis sensor
73, 74 Electromagnet unit
75 Permanent magnet
76, 80 Core
76a, 80a First iron core portion
76b, 80b Second iron core portion
76c, 80c Third iron core portion
77a, 81a First coil portion
77b, 81b Second coil portion
77c, 81c Third coil portion

## Claims

1. A guide mechanism (61, 62) for a conveyance cart (15) which is used for a conveyance cart (15) configured to travel along a guide rail made of a ferromagnetic material provided on a conveyance route, and is provided in the conveyance cart (15), the guide mechanism (61, 62) comprising:
a permanent magnet (75) configured to produce a magnetic field;
two electromagnetic units (73, 74) comprising each:
a core (76, 80) that comprises a first iron core portion (76a, 80a) which is positioned below the guide rail, and attracts the guide rail from below using a magnetic field produced by the permanent magnet (75), a second iron core portion (76b, 80b) which is positioned on one end side in a width direction of the conveyance cart (15), and attracts the guide rail from the one end side in the width direction of the conveyance cart (15) using the magnetic field produced by the permanent magnet (75), and a third iron core portion (76c, 80c) which is arranged with a predetermined interval from the second iron core portion (76b, 80b) in the width direction of the conveyance cart (15), and attracts the guide rail in a direction opposite to an attracting direction by the second iron core portion (76b, 80b) using the magnetic field produced by the permanent magnet (75);
a first coil portion which is wound around the first iron core portion (76a, 80a), and causes a change in a magnetic flux density acting between the first iron core portion 76a, 80a) and the guide rail during power supply;
a second coil portion which is wound around the second iron core portion (76b, 80b), and causes a change in a magnetic flux density acting between the second iron core portion (76b, 80b) and the guide rail during the power supply; and
a third coil portion which is wound around the third iron core portion (76c, 80c), and causes a change in a magnetic flux density acting between the third iron core portion (76c, 80c) and the guide rail during the power supply; and
a holding member (66) configured to hold the two electromagnetic units (73, 74) and the permanent magnet (75) in a state in which the permanent magnet (75) is held between the three iron core portions (76a, 76b, 76c) of one electromagnetic unit (73) of the two electromagnetic units (73, 74) and the three iron core portions (80a, 80b, 80c) of the other electromagnetic unit (74), and to be pivotally supported by a support member (34) fixed to a link member (31) of the conveyance cart (15) with a longitudinal direction aligned with the width direction of the conveyance cart (15).

2. The guide mechanism (61, 62) for a conveyance cart (15) according to claim 1, wherein
when the permanent magnet (75) is held between the two electromagnetic units (73, 74), the magnetic field produced by the permanent magnet (75) forms a magnetic circuit of a first magnetic loop which passes through the first iron core portion (80a) of one electromagnetic unit (74) of the two electromagnetic units (73, 74), the guide rail, and the first iron core portion (76a) of the other electromagnetic unit (73) of the two electromagnetic units (73, 74), a magnetic circuit of a second closed loop which passes through the second iron core portion (80b) of one electromagnetic unit (74) of the two electromagnetic units (73, 74), the guide rail, and the second iron core portion (76b) of the other electromagnetic unit (73) of the two electromagnetic units (73, 74), and a magnetic circuit of a third closed loop which passes the third iron core portion (80c) of one electromagnetic unit (74) of the two electromagnetic units (73, 74), the guide rail, and the third iron core portion (76c) of the other electromagnetic unit (73) of the two electromagnetic units (73, 74).

3. The guide mechanism (61, 62) for a conveyance cart (15) according to claim 1 or 2, further comprising:
a first distance sensor (70) which is provided on a side of the guide rail and is configured to detect a distance in the width direction of the conveyance cart (15);
a second distance sensor (71) which is provided below the guide rail, and is configured to detect a distance in an up-down direction of the conveyance cart (15);
a power supply unit (102) configured to supply electric power to each coil portion of the electromagnetic unit (73, 74);
a calculation unit (105) configured to calculate a variation amount in each of the width direction and the up-down direction of the conveyance cart (15) using detection signals from the first distance sensor (70) and the second distance sensor (71); and
a control unit (101) configured to control the electric power to be supplied from the power supply unit to the coil portions of each of the two electromagnetic units (73, 74) based on results of the variation amounts calculated by the calculation unit (105).

4. The guide mechanism (61, 62) for a conveyance cart (15) according to claim 3, wherein
the control unit (101) is configured to control the power supply unit (102) to increase the magnetic flux density acting between the first iron core portion (76a, 80a) and the guide rail by supplying the electric power to the first coil portion (77a, 81a) wound around the first iron core portion (76a, 80a) of each of the two electromagnetic units (73, 74), based on the variation amount in the up-down direction of the conveyance cart (15) due to sending of a conveyance object onto the conveyance cart (15).

5. The guide mechanism (61, 62) for a conveyance cart (15) according to claim 3 or 4, wherein
the control unit (101) is configured to control the power supply unit (102) to change the magnetic flux density acting between the first iron core portion (76a, 80a) and the guide rail by supplying the electric power to the first coil portion (77A, 81a) wound around the first iron core portion (76a, 80a) of each of the two electromagnetic units (73, 74), based on the variation amount in the up-down direction of the conveyance cart (15) based on a height difference of the conveyance route.

6. The guide mechanism (61, 62) for a conveyance cart (15) according to any one of claims 3 to 5, wherein
the control unit (101) is configured to control the power supply unit (102) to change the magnetic flux density acting between the second iron core portion (76b, 80b) and the guide rail and the magnetic flux density acting between the third iron core portion (76c, 80c) and the guide rail by supplying the electric power to the second coil portion (77b, 81b) wound around the second iron core portion (76b, 80b) and the third coil portion (77c, 81c) of each of the two electromagnetic units (73, 74), based on the variation amount in the width direction of the conveyance cart (15) when the conveyance cart (15) passes through a curve in the conveyance route.

7. The guide mechanism (61, 62) for a conveyance cart (15) according to any one of claims 1 to 6, further comprising:
a first guide wheel (67) which is pivotally supported by the holding member (66) to be positioned above the guide rail, and is brought in sliding contact with a top of the guide rail when the conveyance cart (15) moves downward, to prevent deviation of the guide rail.

8. The guide mechanism (61, 62) for a conveyance cart (15) according to any one of claims 1 to 7, further comprising:
a pair of second guide wheels (68, 69) which are pivotally supported by the holding member (66) to be positioned on sides of the guide rail, and are brought in sliding contact with sides of the guide rail when the conveyance cart (15) moves in the width direction, to prevent the core (76, 80) of the electromagnetic unit (73, 74) from contacting the guide rail.

9. The guide mechanism (61, 62) for a conveyance cart (15) according to any one of claims 1 to 8, wherein
an external cross-sectional shape of the guide rail is a round shape or an ellipse shape,
a surface facing the guide rail surface of the first iron core portion (76a, 80a) in a non-contact manner forms a recessed surface at a curvature which is substantially equal to a curvature of a facing guide rail surface,
a surface facing the guide rail surface of the second iron core portion (76b, 80b) in a non-contact manner forms a recessed surface at a curvature which is substantially equal to a curvature of a facing guide rail surface, and
a surface facing the guide rail surface of the third iron core portion (76c, 80c) in a non-contact manner forms a recessed surface at a curvature which is substantially equal to a curvature of a facing guide rail surface.

10. A sorting conveyor (10) comprising a plurality of conveyance carts (15) each comprising a link (31) extending in one direction, and a conveyor (41, 42) for a cross sorter configured to convey a conveyance object in a direction perpendicular to an extending direction of the link (31); wherein the plurality of conveyance carts (15) and the conveyor (41,42) are connected to one another by front and rear ends of the link (31), and the plurality of conveyance carts (15) are caused to travel along a guide rail made of a ferromagnetic material provided on a conveyance route on receipt of a driving force from a driving source arranged in the conveyance route, wherein
the conveyance cart (15) comprises the guide mechanism (61,62) according to claim 1 configured to guide a traveling direction of the conveyance cart (15) along the guide rail in a non-contact manner with respect to the guide rail when traveling along the conveyance route.

11. The sorting conveyor (10) according to claim 10, wherein
when the permanent magnet (75) is held between the two electromagnetic units (73, 74), the magnetic field produced by the permanent magnet (75) forms a magnetic circuit of a first magnetic loop which passes through the first iron core portion (80a) of one electromagnetic unit (74) of the two electromagnetic units (73, 74), the guide rail, and the first iron core portion (76a) of the other electromagnetic unit (73) of the two electromagnetic units (73, 74), a magnetic circuit of a second closed loop which passes through the second iron core portion (76b) of one electromagnetic unit (73) of the two electromagnetic units (73, 74), the guide rail, and the second iron core portion (80c) of the other electromagnetic unit (74) of the two electromagnetic units (73, 74), and a magnetic circuit of a third closed loop which passes the third iron core portion (80c) of one electromagnetic unit (74) of the two electromagnetic units (73, 74), the guide rail, and the third iron core portion (76c) of the other electromagnetic unit (73) of the two electromagnetic units (73, 74).

12. The sorting conveyor (10) according to claim 10 or 11, wherein
the guide mechanism (61, 62) comprises:
a first distance sensor (70) which is provided on a side of the guide rail and is configured to detect a distance in the width direction of the conveyance cart (15); and
a second distance sensor (71) which is provided below the guide rail, and is configured to detect a distance in an up-down direction of the conveyance cart (15), and
the conveyance cart (15) comprises:
a power supply unit (102) configured to supply electric power to each coil portion of the electromagnetic unit (73, 74);
a calculation unit (105) configured to calculate a variation amount in each of the width direction and the up-down direction of the conveyance cart (15) using detection signals from the first distance sensor (70) and the second distance sensor (71); and
a control unit (101) configured to control the electric power to be supplied from the power supply unit (102) to the coil portions of each of the two electromagnetic units (73, 74) based on results of the variation amounts calculated by the calculation unit (105).

13. The sorting conveyor (10) according to claim 12, wherein
the control unit (101) is configured to control the power supply unit (102) to increase the magnetic flux density acting between the first iron core portion (76a, 80a) and the guide rail by supplying the electric power to the first coil portion (77a, 81a) wound around the first iron core portion (76a, 80a) of each of the two electromagnetic units (73, 74), based on the variation amount in the up-down direction of the conveyance cart (15) due to sending of a conveyance object onto the conveyor for a cross sorter.

14. The sorting conveyor (10) according to claim 12 or 13, wherein
the control unit (101) is configured to control the power supply unit (102) to change the magnetic flux density acting between the first iron core portion (76a, 80a) and the guide rail by supplying the electric power to the first coil portion (77a, 81a) wound around the first iron core portion (76a, 80a) of each of the two electromagnetic units, based on the variation amount in the up-down direction of the conveyance cart (15) based on a height difference of the conveyance route.

15. The sorting conveyor (10) according to any one of claims 12 to 14, wherein
the control unit (101) is configured to control the power supply unit (102) to change the magnetic flux density acting between the second iron core portion (76b, 80b) and the guide rail and the magnetic flux density acting between the third iron core portion (76c, 80c) and the guide rail by supplying the electric power to the second coil portion (77b, 81b) wound around the second iron core portion (76b, 80b) and the third coil portion (77c, 81c) of each of the two electromagnetic units (73, 74), based on the variation amount in the width direction of the conveyance cart (15) when the conveyance cart (15) passes through a curve in the conveyance route.

16. The sorting conveyor (10) according to any one of claims 10 to 15, wherein
the guide mechanism (61, 62) comprises a first guide wheel (67) which is pivotally supported by the holding member (66) to be positioned above the guide rail, and is brought in sliding contact with a top of the guide rail when the conveyance cart (15) moves downward, to prevent deviation in the guide rail in the guide mechanism (61, 62).

17. The sorting conveyor (10) according to any one of claims 10 to 16, wherein
the guide mechanism (61, 62) comprises a pair of second guide wheels (68, 69) which are pivotally supported by the holding member (66) to be positioned on sides of the guide rail, and are brought in sliding contact with sides of the guide rail when the conveyance cart (15) moves in the width direction, to prevent the core (76) of the electromagnetic unit (73, 74) from contacting the guide rail.

18. The sorting conveyor (10) according to any one of claims 10 to 17, wherein
the guide rail is a pair of traveling rails (25, 25') arranged along the conveyance route, and
the guide mechanism (61, 62) is pivotally supported on both end portions (34a, 34b) of the support member (34) corresponding to each traveling rail (25, 25') of the pair of traveling rails (25, 25').

19. The sorting conveyor (10) according to any one of claims 10 to 18, wherein
an external cross-sectional shape of the guide rail is a round shape or an ellipse shape,
a surface facing the guide rail surface of the first iron core portion (76a, 80a) in a non-contact manner forms a recessed surface at a curvature which is substantially equal to a curvature of a facing guide rail surface,
a surface facing the guide rail surface of the second iron core portion (76b, 80b) in a non-contact manner forms a recessed surface at a curvature which is substantially equal to a curvature of a facing guide rail surface, and
a surface facing the guide rail surface of the third iron core portion (76c, 80c) in a non-contact manner forms a recessed surface at a curvature which is substantially equal to a curvature of a facing guide rail surface.

## Patentansprüche

1. Führungsmechanismus (61, 62) für einen Förderwagen (15), der für einen Förderwagen (15) verwendet wird, der konfiguriert ist, um entlang einer Führungsschiene zu fahren, die aus einem ferromagnetischen Material gefertigt ist, das auf einer Förderstrecke bereitgestellt ist, und der in dem Förderwagen (15) bereitgestellt ist, der Führungsmechanismus (61, 62) umfassend:
einen Permanentmagneten (75), der konfiguriert ist, um ein Magnetfeld zu erzeugen;
zwei elektromagnetische Einheiten (73, 74), die jeweils Folgendes umfassen:
einen Kern (76, 80), der einen ersten Eisenkernabschnitt (76a, 80a) umfasst, der unterhalb der Führungsschiene positioniert ist und die Führungsschiene von unten unter Verwendung eines von dem Permanentmagneten (75) erzeugten Magnetfelds anzieht, einen zweiten Eisenkernabschnitt (76b, 80b), der an einer Endseite in einer Breitenrichtung des Förderwagens (15) positioniert ist und die Führungsschiene von der einen Endseite in der Breitenrichtung des Förderwagens (15) unter Verwendung des von dem Permanentmagneten (75) erzeugten Magnetfelds anzieht, und einen dritten Eisenkernabschnitt (76c, 80c), der mit einem vorbestimmten Abstand von dem zweiten Eisenkernabschnitt (76b, 80b) in der Breitenrichtung des Förderwagens (15) angeordnet ist und die Führungsschiene in einer Richtung entgegengesetzt zu einer Anziehungsrichtung durch den zweiten Eisenkernabschnitt (76b, 80b) unter Verwendung des durch den Permanentmagneten (75) erzeugten Magnetfelds anzieht;
einen ersten Spulenabschnitt, der um den ersten Eisenkernabschnitt (76a, 80a) gewickelt ist und eine Änderung in einer magnetischen Flussdichte bewirkt, die während einer Stromzufuhr zwischen dem ersten Eisenkernabschnitt (76a, 80a) und der Führungsschiene wirkt;
einen zweiten Spulenabschnitt, der um den zweiten Eisenkernabschnitt (76b, 80b) gewickelt ist und eine Änderung in einer magnetischen Flussdichte bewirkt, die während der Stromzufuhr zwischen dem zweiten Eisenkernabschnitt (76b, 80b) und der Führungsschiene wirkt; und
einen dritten Spulenabschnitt, der um den dritten Eisenkernabschnitt (76c, 80c) gewickelt ist und eine Änderung in einer magnetischen Flussdichte bewirkt, die während der Stromzufuhr zwischen dem dritten Eisenkernabschnitt (76c, 80c) und der Führungsschiene wirkt; und
ein Halteelement (66), das konfiguriert ist, um die zwei elektromagnetischen Einheiten (73, 74) und den Permanentmagneten (75) in einem Zustand zu halten, in dem der Permanentmagnet (75) zwischen den drei Eisenkernabschnitten (76a, 76b, 76c) einer elektromagnetischen Einheit (73) der zwei elektromagnetischen Einheiten (73, 74) und den drei Eisenkernabschnitten (80a, 80b, 80c) der anderen elektromagnetischen Einheit (74) gehalten wird, und schwenkbar von einem Trägerelement (34) getragen wird, das an einem Verbindungselement (31) des Förderwagens (15) befestigt ist, wobei eine Längsrichtung mit der Breitenrichtung des Förderwagens (15) ausgerichtet ist.

2. Führungsmechanismus (61, 62) für einen Förderwagen (15) nach Anspruch 1,
wobei, wenn der Permanentmagnet (75) zwischen den zwei elektromagnetischen Einheiten (73, 74) gehalten wird, das durch den Permanentmagneten (75) erzeugte Magnetfeld einen Magnetkreis einer ersten magnetischen Schleife, die durch den ersten Eisenkernabschnitt (80a) einer elektromagnetischen Einheit (74) der zwei elektromagnetischen Einheiten (73, 74), die Führungsschiene und den ersten Eisenkernabschnitt (76a) der anderen elektromagnetischen Einheit (73) der zwei elektromagnetischen Einheiten (73, 74) verläuft, einen Magnetkreis einer zweiten geschlossenen Schleife, der durch den zweiten Eisenkernabschnitt (80b) einer elektromagnetischen Einheit (74) der zwei elektromagnetischen Einheiten (73, 74), die Führungsschiene und den zweiten Eisenkernabschnitt (76b) der anderen elektromagnetischen Einheit (73) der zwei elektromagnetischen Einheiten (73, 74) verläuft, und einen Magnetkreis einer dritten geschlossenen Schleife, der den dritten Eisenkernabschnitt (80c) einer elektromagnetischen Einheit (74) der zwei elektromagnetischen Einheiten (73, 74), die Führungsschiene und den dritten Eisenkernabschnitt (76c) der anderen elektromagnetischen Einheit (73) der zwei elektromagnetischen Einheiten (73, 74) verläuft, bildet.

3. Führungsmechanismus (61, 62) für einen Förderwagen (15) nach Anspruch 1 oder 2, ferner umfassend:
einen ersten Abstandssensor (70), der an einer Seite der Führungsschiene bereitgestellt und konfiguriert ist, um einen Abstand in der Breitenrichtung des Förderwagens (15) zu erfassen;
einen zweiten Abstandssensor (71), der unterhalb der Führungsschiene bereitgestellt ist und der konfiguriert ist, um einen Abstand in einer Auf-/Abwärtsrichtung des Förderwagens (15) zu erfassen;
eine Stromzufuhreinheit (102), die konfiguriert ist, um jedem Spulenabschnitt der elektromagnetischen Einheit (73, 74) elektrische Leistung zuzuführen;
eine Berechnungseinheit (105), die konfiguriert ist, um unter Verwendung von Erfassungssignalen von dem ersten Abstandssensor (70) und dem zweiten Abstandssensor (71) einen Veränderungsbetrag in jeder von der Breitenrichtung und der Auf-/Abwärts-Richtung des Förderwagens (15) zu berechnen; und
eine Steuereinheit (101), die konfiguriert ist, um die von der Stromzufuhreinheit an die Spulenabschnitte jeder der zwei elektromagnetischen Einheiten (73, 74) zuzuführende elektrische Leistung basierend auf Resultaten der von der Berechnungseinheit (105) berechneten Änderungsbeträge zu steuern.

4. Führungsmechanismus (61, 62) für einen Förderwagen (15) nach Anspruch 3,
wobei die Steuereinheit (101) konfiguriert ist, um die Stromzufuhreinheit (102) zu steuern, um die magnetische Flussdichte, die zwischen dem ersten Eisenkernabschnitt (76a, 80a) und der Führungsschiene wirkt, zu erhöhen, indem sie dem ersten Spulenabschnitt (77a, 81a), der um den ersten Eisenkernabschnitt (76a, 80a) von jeder der zwei elektromagnetischen Einheiten (73, 74) gewickelt ist, aufgrund eines Sendens eines Förderobjekts auf den Förderwagen (15) basierend auf dem Änderungsbetrag in der Auf-/Abwärts-Richtung des Förderwagens (15) elektrische Leistung zuführt.

5. Führungsmechanismus (61, 62) für einen Förderwagen (15) nach Anspruch 3 oder 4,
wobei die Steuereinheit (101) konfiguriert ist, um die Stromzufuhreinheit (102) zu steuern, um die magnetische Flussdichte, die zwischen dem ersten Eisenkernabschnitt (76a, 80a) und der Führungsschiene wirkt, zu ändern, indem sie dem ersten Spulenabschnitt (77A, 81a), der um den ersten Eisenkernabschnitt (76a, 80a) von jeder der zwei elektromagnetischen Einheiten (73, 74) gewickelt ist, basierend auf dem Änderungsbetrag in der Auf-/Abwärts-Richtung des Förderwagens (15) basierend auf einem Höhenunterschied der Förderstrecke elektrische Leistung zuführt.

6. Führungsmechanismus (61, 62) für einen Förderwagen (15) nach einem der Ansprüche 3 bis 5, wobei
die Steuereinheit (101) konfiguriert ist, um die Stromzufuhreinheit (102) zu steuern, um die magnetische Flussdichte, die zwischen dem zweiten Eisenkernabschnitt (76b, 80b) und der Führungsschiene wirkt, und die magnetische Flussdichte, die zwischen dem dritten Eisenkernabschnitt (76c, 80c) und der Führungsschiene wirkt, zu ändern, indem sie dem zweiten Spulenabschnitt (77b, 81b), der um den zweiten Eisenkernabschnitt (76b, 80b) gewickelt ist, und dem dritten Spulenabschnitt (77c, 81c) von jeder der zwei elektromagnetischen Einheiten (73, 74), basierend auf dem Änderungsbetrag in der Breitenrichtung des Förderwagens (15), wenn der Förderwagen (15) durch eine Kurve in der Förderstrecke verläuft, elektrische Leistung zuführt.

7. Führungsmechanismus (61, 62) für einen Förderwagen (15) nach einem der Ansprüche 1 bis 6, ferner umfassend:
ein erstes Führungsrad (67), das durch das Halteelement (66) schwenkbar gelagert ist, um oberhalb der Führungsschiene positioniert zu sein, und das in Gleitkontakt mit einer Oberseite der Führungsschiene gebracht wird, wenn sich der Förderwagen (15) nach unten bewegt, um ein Abweichen der Führungsschiene zu verhindern.

8. Führungsmechanismus (61, 62) für einen Förderwagen (15) nach einem der Ansprüche 1 bis 7, ferner umfassend:
ein Paar zweiter Führungsräder (68, 69), die durch das Halteelement (66) schwenkbar gelagert sind, um an Seiten der Führungsschiene positioniert zu sein, und die in Gleitkontakt mit Seiten der Führungsschiene gebracht werden, wenn sich der Förderwagen (15) in der Breitenrichtung bewegt, um zu verhindern, dass der Kern (76, 80) der elektromagnetischen Einheit (73, 74) die Führungsschiene berührt.

9. Führungsmechanismus (61, 62) für einen Förderwagen (15) nach einem der Ansprüche 1 bis 8, wobei
die äußere Querschnittsform der Führungsschiene eine runde Form oder eine Ellipsenform ist,
eine Oberfläche, die der Führungsschienenoberfläche des ersten Eisenkernabschnitts (76a, 80a) berührungslos zugewandt ist, eine vertiefte Oberfläche mit einer Krümmung bildet, die im Wesentlichen gleich wie eine Krümmung einer zugewandten Führungsschienenoberfläche ist,
eine Oberfläche, die der Führungsschienenoberfläche des zweiten Eisenkernabschnitts (76b, 80b) berührungslos zugewandt ist, eine vertiefte Oberfläche mit einer Krümmung bildet, die im Wesentlichen gleich wie eine Krümmung einer zugewandten Führungsschienenoberfläche ist, und
eine Oberfläche, die der Führungsschienenoberfläche des dritten Eisenkernabschnitts (76c, 80c) berührungslos zugewandt ist, eine vertiefte Oberfläche mit einer Krümmung bildet, die im Wesentlichen gleich wie eine Krümmung einer zugewandten Führungsschienenoberfläche ist.

10. Sortierförderer (10), umfassend eine Vielzahl von Förderwagen (15), jeweils umfassend ein Glied (31), das sich in eine Richtung erstreckt, und einen Förderer (41, 42) für einen Quersortierer, der konfiguriert ist, um ein Förderobjekt in eine Richtung senkrecht zu einer Erstreckungsrichtung des Glieds (31) zu fördern;
wobei die Vielzahl von Förderwagen (15) und der Förderer (41, 42) durch ein vorderes und ein hinteres Ende des Verbindungsglieds (31) miteinander verbunden sind und die Vielzahl von Förderwagen (15) veranlasst werden, bei Empfang einer Antriebskraft von einer in der Förderstrecke angeordneten Antriebsquelle entlang einer Führungsschiene aus einem ferromagnetischen Material, die auf einer Förderstrecke bereitgestellt ist, zu fahren, wobei der Förderwagen (15) den Führungsmechanismus (61, 62) nach Anspruch 1 umfasst, der konfiguriert ist, um eine Fahrtrichtung des Förderwagens (15) entlang der Führungsschiene berührungslos in Bezug auf die Führungsschiene zu führen, wenn er entlang der Förderstrecke fährt.

11. Sortierförderer (10) nach Anspruch 10, wobei, wenn der Permanentmagnet (75) zwischen den zwei elektromagnetischen Einheiten (73, 74) gehalten wird, das durch den Permanentmagneten (75) erzeugte Magnetfeld einen Magnetkreis einer ersten magnetischen Schleife, die durch den ersten Eisenkernabschnitt (80a) einer elektromagnetischen Einheit (74) der zwei elektromagnetischen Einheiten (73, 74), die Führungsschiene und den ersten Eisenkernabschnitt (76a) der anderen elektromagnetischen Einheit (73) der zwei elektromagnetischen Einheiten (73, 74) verläuft, einen Magnetkreis einer zweiten geschlossenen Schleife, der durch den zweiten Eisenkernabschnitt (76b) einer elektromagnetischen Einheit (73) der zwei elektromagnetischen Einheiten (73, 74), die Führungsschiene und den zweiten Eisenkernabschnitt (80c) der anderen elektromagnetischen Einheit (74) der zwei elektromagnetischen Einheiten (73, 74) verläuft, und einen Magnetkreis einer dritten geschlossenen Schleife, der den dritten Eisenkernabschnitt (80c) einer elektromagnetischen Einheit (74) der zwei elektromagnetischen Einheiten (73, 74), die Führungsschiene und den dritten Eisenkernabschnitt (76c) der anderen elektromagnetischen Einheit (73) der zwei elektromagnetischen Einheiten (73, 74) verläuft, bildet.

12. Sortierförderer (10) nach Anspruch 10 oder 11, wobei der Führungsmechanismus (61, 62) Folgendes umfasst:
einen ersten Abstandssensor (70), der an einer Seite der Führungsschiene bereitgestellt und konfiguriert ist, um einen Abstand in der Breitenrichtung des Förderwagens (15) zu erfassen; und
einen zweiten Abstandssensor (71), der unterhalb der Führungsschiene bereitgestellt ist und der konfiguriert ist, um einen Abstand in einer Auf-/Abwärtsrichtung des Förderwagens (15) zu erfassen, und wobei der Förderwagen (15) Folgendes umfasst:
eine Stromzufuhreinheit (102), die konfiguriert ist, um jedem Spulenabschnitt der elektromagnetischen Einheit (73, 74) elektrische Leistung zuzuführen;
eine Berechnungseinheit (105), die konfiguriert ist, um unter Verwendung von Erfassungssignalen von dem ersten Abstandssensor (70) und dem zweiten Abstandssensor (71) einen Veränderungsbetrag in jeder von der Breitenrichtung und der Auf-/Abwärts-Richtung des Förderwagens (15) zu berechnen; und
eine Steuereinheit (101), die konfiguriert ist, um die von der Stromzufuhreinheit (102) an die Spulenabschnitte jeder der zwei elektromagnetischen Einheiten (73, 74) zuzuführende elektrische Leistung basierend auf Resultaten der von der Berechnungseinheit (105) berechneten Änderungsbeträge zu steuern.

13. Sortierförderer (10) nach Anspruch 12, wobei
die Steuereinheit (101) konfiguriert ist, um die Stromzufuhreinheit (102) zu steuern, um die magnetische Flussdichte, die zwischen dem ersten Eisenkernabschnitt (76a, 80a) und der Führungsschiene wirkt, zu erhöhen, indem sie dem ersten Spulenabschnitt (77a, 81a), der um den ersten Eisenkernabschnitt (76a, 80a) von jeder der zwei elektromagnetischen Einheiten (73, 74) gewickelt ist, aufgrund eines Sendens eines Förderobjekts auf den Förderer für einen Quersortierer basierend auf dem Änderungsbetrag in der Auf-/Abwärts-Richtung des Förderwagens (15) elektrische Leistung zuführt.

14. Sortierförderer (10) nach Anspruch 12 oder 13, wobei
die Steuereinheit (101) konfiguriert ist, um die Stromzufuhreinheit (102) zu steuern, um die magnetische Flussdichte, die zwischen dem ersten Eisenkernabschnitt (76a, 80a) und der Führungsschiene wirkt, zu ändern, indem sie dem ersten Spulenabschnitt (77a, 81a), der um den ersten Eisenkernabschnitt (76a, 80a) von jeder der zwei elektromagnetischen Einheiten gewickelt ist, basierend auf dem Änderungsbetrag in der Auf-/Abwärts-Richtung des Förderwagens (15) basierend auf einem Höhenunterschied der Förderstrecke elektrische Leistung zuführt.

15. Sortierförderer (10) nach einem der Ansprüche 12 bis 14, wobei
die Steuereinheit (101) konfiguriert ist, um die Stromzufuhreinheit (102) zu steuern, um die magnetische Flussdichte, die zwischen dem zweiten Eisenkernabschnitt (76b, 80b) und der Führungsschiene wirkt, und die magnetische Flussdichte, die zwischen dem dritten Eisenkernabschnitt (76c, 80c) und der Führungsschiene wirkt, zu ändern, indem sie dem zweiten Spulenabschnitt (77b, 81b), der um den zweiten Eisenkernabschnitt (76b, 80b) gewickelt ist, und dem dritten Spulenabschnitt (77c, 81c) von jeder der zwei elektromagnetischen Einheiten (73, 74), basierend auf dem Änderungsbetrag in der Breitenrichtung des Förderwagens (15), wenn der Förderwagen (15) durch eine Kurve in der Förderstrecke verläuft, elektrische Leistung zuführt.

16. Sortierförderer (10) nach einem der Ansprüche 10 bis 15, wobei
der Führungsmechanismus (61, 62) ein erstes Führungsrad (67) umfasst, das durch das Halteelement (66) schwenkbar gelagert ist, um oberhalb der Führungsschiene positioniert zu sein, und das in Gleitkontakt mit einer Oberseite der Führungsschiene gebracht wird, wenn sich der Förderwagen (15) nach unten bewegt, um ein Abweichen in der Führungsschiene in dem Führungsmechanismus (61, 62) zu verhindern.

17. Sortierförderer (10) nach einem der Ansprüche 10 bis 16, wobei
der Führungsmechanismus (61, 62) ein Paar zweiter Führungsräder (68, 69) umfasst, die durch das Halteelement (66) schwenkbar gelagert sind, um an Seiten der Führungsschiene positioniert zu sein, und die in Gleitkontakt mit Seiten der Führungsschiene gebracht werden, wenn sich der Förderwagen (15) in der Breitenrichtung bewegt, um zu verhindern, dass der Kern (76) der elektromagnetischen Einheit (73, 74) die Führungsschiene berührt.

18. Sortierförderer (10) nach einem der Ansprüche 10 bis 17, wobei
die Führungsschiene ein Paar entlang des Förderweges angeordneter Fahrschienen (25, 25') ist, und
der Führungsmechanismus (61, 62) schwenkbar auf beiden Endabschnitten (34a, 34b) des Trägerelements (34) gelagert ist, die jeder Fahrschiene (25, 25') des Paars von Fahrschienen (25, 25') entsprechen.

19. Sortierförderer (10) nach einem der Ansprüche 10 bis 18, wobei
die äußere Querschnittsform der Führungsschiene eine runde Form oder eine Ellipsenform ist;
eine Oberfläche, die der Führungsschienenoberfläche des ersten Eisenkernabschnitts (76a, 80a) berührungslos zugewandt ist, eine vertiefte Oberfläche mit einer Krümmung bildet, die im Wesentlichen gleich wie eine Krümmung einer zugewandten Führungsschienenoberfläche ist,
eine Oberfläche, die der Führungsschienenoberfläche des zweiten Eisenkernabschnitts (76b, 80b) berührungslos zugewandt ist, eine vertiefte Oberfläche mit einer Krümmung bildet, die im Wesentlichen gleich wie eine Krümmung einer zugewandten Führungsschienenoberfläche ist, und
eine Oberfläche, die der Führungsschienenoberfläche des dritten Eisenkernabschnitts (76c, 80c) berührungslos zugewandt ist, eine vertiefte Oberfläche mit einer Krümmung bildet, die im Wesentlichen gleich wie eine Krümmung einer zugewandten Führungsschienenoberfläche ist.

## Revendications

1. Mécanisme de guidage (61, 62) pour un chariot de transport (15) qui est utilisé pour un chariot de transport (15) configuré pour se déplacer le long d'un rail de guidage constitué d'un matériau ferromagnétique prévu sur un itinéraire de transport, et qui est prévu dans le chariot de transport (15), le mécanisme de guidage (61, 62) comprenant :
un aimant permanent (75) configuré pour produire un champ magnétique;
deux unités électromagnétiques (73, 74) comprenant chacune :
un noyau (76, 80) qui comprend une première partie de noyau en fer (76a, 80a) qui est positionnée sous le rail de guidage, et qui attire le rail de guidage par le dessous à l'aide d'un champ magnétique produit par l'aimant permanent (75), une deuxième partie de noyau en fer (76b, 80b) qui est positionnée sur un côté d'extrémité dans une direction de la largeur du chariot de transport (15), et qui attire le rail de guidage depuis le côté d'extrémité dans la direction de la largeur du chariot de transport (15) à l'aide du champ magnétique produit par l'aimant permanent (75), et une troisième partie de noyau en fer (76c, 80c) qui est agencée avec un intervalle prédéterminé par rapport à la deuxième partie de noyau en fer (76b, 80b) dans la direction de la largeur du chariot de transport (15), et qui attire le rail de guidage dans une direction opposée à la direction d'attraction exercée par la deuxième partie de noyau en fer (76b, 80b), à l'aide du champ magnétique produit par l'aimant permanent (75) ;
une première partie de bobine qui est enroulée autour de la première partie de noyau en fer (76a, 80a), et qui occasionne une modification d'une densité de flux magnétique agissant entre la première partie de noyau en fer (76a, 80a) et le rail de guidage pendant l'alimentation électrique;
une deuxième partie de bobine qui est enroulée autour de la deuxième partie de noyau en fer (76b, 80b), et qui occasionne une modification d'une densité de flux magnétique agissant entre la deuxième partie de noyau en fer (76b, 80b) et le rail de guidage pendant l'alimentation électrique ; et
une troisième partie de bobine qui est enroulée autour de la troisième partie de noyau en fer (76c, 80c), et qui occasionne une modification d'une densité de flux magnétique agissant entre la troisième partie de noyau en fer (76c, 80c) et le rail de guidage pendant l'alimentation électrique ; et
un élément de maintien (66) configuré pour maintenir les deux unités électromagnétiques (73, 74) et l'aimant permanent (75) dans un état dans lequel l'aimant permanent (75) est maintenu entre les trois parties de noyau en fer (76a, 76b, 76c) d'une unité électromagnétique (73) des deux unités électromagnétiques (73, 74) et les trois parties de noyau en fer (80a, 80b, 80c) de l'autre unité électromagnétique (74), et pour être supporté de manière pivotante par un élément de support (34) fixé à un élément de liaison (31) du chariot de transport (15) avec une direction longitudinale alignée avec la direction de la largeur du chariot de transport (15).

2. Mécanisme de guidage (61, 62) pour un chariot de transport (15) selon la revendication 1, dans lequel,
lorsque l'aimant permanent (75) est maintenu entre les deux unités électromagnétiques (73, 74), le champ magnétique produit par l'aimant permanent (75) forme un circuit magnétique d'une première boucle magnétique qui traverse la première partie de noyau en fer (80a) d'une unité électromagnétique (74) des deux unités électromagnétiques (73, 74), le rail de guidage et la première partie de noyau en fer (76a) de l'autre unité électromagnétique (73) des deux unités électromagnétiques (73, 74), un circuit magnétique d'une deuxième boucle fermée qui traverse la deuxième partie de noyau en fer (80b) d'une unité électromagnétique (74) des deux unités électromagnétiques (73, 74), le rail de guidage et la deuxième partie de noyau en fer (76b) de l'autre unité électromagnétique (73) des deux unités électromagnétiques (73, 74), et un circuit magnétique d'une troisième boucle fermée qui traverse la troisième partie de noyau en fer (80c) d'une unité électromagnétique (74) des deux unités électromagnétiques (73, 74), le rail de guidage et la troisième partie de noyau en fer (76c) de l'autre unité électromagnétique (73) des deux unités électromagnétiques (73, 74).

3. Mécanisme de guidage (61, 62) pour un chariot de transport (15) selon la revendication 1 ou 2, comprenant en outre :
un premier capteur de distance (70) qui est prévu sur un côté du rail de guidage et qui est configuré pour détecter une distance dans la direction de la largeur du chariot de transport (15) ;
un deuxième capteur de distance (71) qui est prévu sous le rail de guidage et qui est configuré pour détecter une distance dans la direction de haut en bas du chariot de transport (15) ;
une unité d'alimentation électrique (102) configurée pour fournir de l'énergie électrique à chaque partie de bobine de l'unité électromagnétique (73, 74) ;
une unité de calcul (105) configurée pour calculer une quantité de variation dans chacune de la direction de la largeur et de la direction de haut en bas du chariot de transport (15) à l'aide des signaux de détection provenant du premier capteur de distance (70) et du deuxième capteur de distance (71) ; et
une unité de commande (101) configurée pour commander l'alimentation électrique devant être fournie par l'unité d'alimentation électrique aux parties de bobine de chacune des deux unités électromagnétiques (73, 74) sur la base de résultats des quantités de variation calculées par l'unité de calcul (105).

4. Mécanisme de guidage (61, 62) pour un chariot de transport (15) selon la revendication 3, dans lequel
l'unité de commande (101) est configurée pour commander l'unité d'alimentation électrique (102) afin d'augmenter la densité de flux magnétique agissant entre la première partie de noyau en fer (76a, 80a) et le rail de guidage, en fournissant l'énergie électrique à la première partie de bobine (77a, 81a) enroulée autour de la première partie de noyau en fer (76a, 80a) de chacune des deux unités électromagnétiques (73, 74), sur la base de la quantité de variation dans la direction de haut en bas du chariot de transport (15) due à l'envoi d'un objet de transport sur le chariot de transport (15).

5. Mécanisme de guidage (61, 62) pour un chariot de transport (15) selon la revendication 3 ou 4, dans lequel
l'unité de commande (101) est configurée pour commander l'unité d'alimentation électrique (102) afin de modifier la densité de flux magnétique agissant entre la première partie de noyau en fer (76a, 80a) et le rail de guidage, en fournissant de l'énergie électrique à la première partie de bobine (77a, 81a) enroulée autour de la première partie de noyau en fer (76a, 80a) de chacune des deux unités électromagnétiques (73, 74), sur la base de la quantité de variation dans la direction de haut en bas du chariot de transport (15) en fonction d'une différence de hauteur de l'itinéraire de transport.

6. Mécanisme de guidage (61, 62) pour un chariot de transport (15) selon l'une quelconque des revendications 3 à 5, dans lequel
l'unité de commande (101) est configurée pour commander l'unité d'alimentation électrique (102) afin de modifier la densité de flux magnétique agissant entre la deuxième partie de noyau en fer (76b, 80b) et le rail de guidage, et la densité de flux magnétique agissant entre la troisième partie de noyau en fer (76c, 80c) et le rail de guidage, en fournissant l'énergie électrique à la deuxième partie de bobine (77b, 81b) enroulée autour de la deuxième partie de noyau en fer (76b, 80b) et à la troisième partie de bobine (77c, 81c) de chacune des deux unités électromagnétiques (73, 74), sur la base de la quantité de variation dans la direction de la largeur du chariot de transport (15) lorsque le chariot de transport (15) traverse une courbe dans l'itinéraire de transport.

7. Mécanisme de guidage (61, 62) pour un chariot de transport (15) selon l'une quelconque des revendications 1 à 6, comprenant en outre :
une première roue de guidage (67) qui est supportée de manière pivotante par l'élément de maintien (66) afin d'être positionnée au-dessus du rail de guidage, et qui est amenée en contact coulissant avec une partie supérieure du rail de guidage lorsque le chariot de transport (15) se déplace vers le bas, afin d'empêcher une déviation du rail de guidage.

8. Mécanisme de guidage (61, 62) pour un chariot de transport (15) selon l'une quelconque des revendications 1 à 7, comprenant en outre :
une paire de deuxièmes roues de guidage (68, 69) qui sont supportées de manière pivotante par l'élément de maintien (66) afin d'être positionnées sur les côtés du rail de guidage, et qui sont amenées en contact coulissant avec les côtés du rail de guidage lorsque le chariot de transport (15) se déplace dans la direction de la largeur, afin d'empêcher le noyau (76, 80) de l'unité électromagnétique (73, 74) d'entrer en contact avec le rail de guidage.

9. Mécanisme de guidage (61, 62) pour un chariot de transport (15) selon l'une quelconque des revendications 1 à 8, dans lequel
une forme en coupe transversale externe du rail de guidage est une forme ronde ou une forme elliptique,
une surface faisant face à la surface de rail de guidage de la première partie de noyau en fer (76a, 80a) de manière sans contact forme une surface en retrait avec une courbure qui est sensiblement égale à une courbure d'une surface de rail de guidage opposée,
une surface faisant face à la surface de rail de guidage de la deuxième partie de noyau en fer (76b, 80b) de manière sans contact forme une surface en retrait avec une courbure qui est sensiblement égale à une courbure d'une surface de rail de guidage opposée, et
une surface faisant face à la surface de rail de guidage de la troisième partie de noyau en fer (76c, 80c) de manière sans contact forme une surface en retrait avec une courbure qui est sensiblement égale à une courbure d'une surface de rail de guidage opposée.

10. Transporteur de tri (10) comprenant une pluralité de chariots de transport (15) comprenant chacun une liaison (31) s'étendant dans une direction, et un transporteur (41, 42) pour un trieur transversal configuré pour transporter un objet de transport dans une direction perpendiculaire à une direction d'extension de la liaison (31) ; dans lequel la pluralité de chariots de transport (15) et le transporteur (41, 42) sont reliés les uns aux autres par les extrémités avant et arrière de la liaison (31), et la pluralité de chariots de transport (15) est amenée à se déplacer le long d'un rail de guidage constitué d'un matériau ferromagnétique prévu sur un itinéraire de transport lors de la réception d'une force d'entraînement provenant d'une source d'entraînement agencée dans l'itinéraire de transport, dans lequel
le chariot de transport (15) comprend le mécanisme de guidage (61, 62) selon la revendication 1, configuré pour guider une direction de déplacement du chariot de transport (15) le long du rail de guidage de manière sans contact par rapport au rail de guidage, lorsqu'il se déplace le long de l'itinéraire de transport.

11. Transporteur de tri (10) selon la revendication 10, dans lequel,
lorsque l'aimant permanent (75) est maintenu entre les deux unités électromagnétiques (73, 74), le champ magnétique produit par l'aimant permanent (75) forme un circuit magnétique d'une première boucle magnétique qui traverse la première partie de noyau en fer (80a) d'une unité électromagnétique (74) des deux unités électromagnétiques (73, 74), le rail de guidage et la première partie de noyau en fer (76a) de l'autre unité électromagnétique (73) des deux unités électromagnétiques (73, 74), un circuit magnétique d'une deuxième boucle fermée qui traverse la deuxième partie de noyau en fer (76b) d'une unité électromagnétique (73) des deux unités électromagnétiques (73, 74), le rail de guidage et la deuxième partie de noyau en fer (80c) de l'autre unité électromagnétique (74) des deux unités électromagnétiques (73, 74), et un circuit magnétique d'une troisième boucle fermée qui traverse la troisième partie de noyau en fer (80c) d'une unité électromagnétique (74) des deux unités électromagnétiques (73, 74), le rail de guidage et la troisième partie de noyau en fer (76c) de l'autre unité électromagnétique (73) des deux unités électromagnétiques (73, 74).

12. Transporteur de tri (10) selon la revendication 10 ou 11, dans lequel
le mécanisme de guidage (61, 62) comprend :
un premier capteur de distance (70) qui est prévu sur un côté du rail de guidage et qui est configuré pour détecter une distance dans la direction de la largeur du chariot de transport (15) ; et
un deuxième capteur de distance (71) qui est prévu sous le rail de guidage et qui est configuré pour détecter une distance dans une direction de haut en bas du chariot de transport (15), et
le chariot de transport (15) comprend :
une unité d'alimentation électrique (102) configurée pour fournir de l'énergie électrique à chaque partie de bobine de l'unité électromagnétique (73, 74) ;
une unité de calcul (105) configurée pour calculer une quantité de variation dans chacune de la direction de la largeur et de la direction de haut en bas du chariot de transport (15) à l'aide des signaux de détection provenant du premier capteur de distance (70) et du deuxième capteur de distance (71) ; et
une unité de commande (101) configurée pour commander l'alimentation électrique devant être fournie par l'unité d'alimentation électrique (102) aux parties de bobine de chacune des deux unités électromagnétiques (73, 74) sur la base de résultats des quantités de variation calculées par l'unité de calcul (105).

13. Transporteur de tri (10) selon la revendication 12, dans lequel
l'unité de commande (101) est configurée pour commander l'unité d'alimentation électrique (102) afin d'augmenter la densité de flux magnétique agissant entre la première partie de noyau en fer (76a, 80a) et le rail de guidage, en fournissant l'énergie électrique à la première partie de bobine (77a, 81a) enroulée autour de la première partie de noyau en fer (76a, 80a) de chacune des deux unités électromagnétiques (73, 74), sur la base de la quantité de variation dans la direction de haut en bas du chariot de transport (15) due à l'envoi d'un objet de transport sur le transporteur pour un trieur transversal.

14. Transporteur de tri (10) selon la revendication 12 ou 13, dans lequel
l'unité de commande (101) est configurée pour commander l'unité d'alimentation électrique (102) afin de modifier la densité de flux magnétique agissant entre la première partie de noyau en fer (76a, 80a) et le rail de guidage, en fournissant l'énergie électrique à la première partie de bobine (77a, 81a) enroulée autour de la première partie de noyau en fer (76a, 80a) de chacune des deux unités électromagnétiques, sur la base de la quantité de variation dans la direction de haut en bas du chariot de transport (15) en fonction d'une différence de hauteur de l'itinéraire de transport.

15. Transporteur de tri (10) selon l'une quelconque des revendications 12 à 14, dans lequel
l'unité de commande (101) est configurée pour commander l'unité d'alimentation électrique (102) afin de modifier la densité de flux magnétique agissant entre la deuxième partie de noyau en fer (76b, 80b) et le rail de guidage, et la densité de flux magnétique agissant entre la troisième partie de noyau en fer (76c, 80c) et le rail de guidage, en fournissant l'énergie électrique à la deuxième partie de bobine (77b, 81b) enroulée autour de la deuxième partie de noyau en fer (76b, 80b) et à la troisième partie de bobine (77c, 81c) de chacune des deux unités électromagnétiques (73, 74), sur la base de la quantité de variation dans la direction de la largeur du chariot de transport (15) lorsque le chariot de transport (15) traverse une courbe dans l'itinéraire de transport.

16. Transporteur de tri (10) selon l'une quelconque des revendications 10 à 15, dans lequel
le mécanisme de guidage (61, 62) comprend une première roue de guidage (67) qui est supportée de manière pivotante par l'élément de maintien (66) afin d'être positionnée au-dessus du rail de guidage, et qui est amenée en contact coulissant avec une partie supérieure du rail de guidage lorsque le chariot de transport (15) se déplace vers le bas, afin d'empêcher une déviation du rail de guidage dans le mécanisme de guidage (61, 62).

17. Transporteur de tri (10) selon l'une quelconque des revendications 10 à 16, dans lequel le mécanisme de guidage (61, 62) comprend une paire de deuxièmes roues de guidage (68, 69) qui sont supportées de manière pivotante par l'élément de maintien (66) afin d'être positionnées sur les côtés du rail de guidage, et qui sont amenées en contact coulissant avec les côtés du rail de guidage lorsque le chariot de transport (15) se déplace dans la direction de la largeur, afin d'empêcher le noyau (76) de l'unité électromagnétique (73, 74) d'entrer en contact avec le rail de guidage.

18. Transporteur de tri (10) selon l'une quelconque des revendications 10 à 17, dans lequel
le rail de guidage est une paire de rails de déplacement (25, 25') agencés le long de l'itinéraire de transport, et
le mécanisme de guidage (61, 62) est supporté de manière pivotante sur les deux parties d'extrémité (34a, 34b) de l'élément de support (34) correspondant à chaque rail de déplacement (25, 25*'*) de la paire de rails de déplacement (25, 25').

19. Transporteur de tri (10) selon l'une quelconque des revendications 10 à 18, dans lequel
une forme en coupe transversale externe du rail de guidage est une forme ronde ou une forme elliptique,
une surface faisant face à la surface de rail de guidage de la première partie de noyau en fer (76a, 80a) de manière sans contact forme une surface en retrait avec une courbure qui est sensiblement égale à une courbure d'une surface de rail de guidage opposée,
une surface faisant face à la surface de rail de guidage de la deuxième partie de noyau en fer (76b, 80b) de manière sans contact forme une surface en retrait avec une courbure qui est sensiblement égale à une courbure d'une surface de rail de guidage opposée, et
une surface faisant face à la surface de rail de guidage de la troisième partie de noyau en fer (76c, 80c) de manière sans contact forme une surface en retrait avec une courbure qui est sensiblement égale à une courbure d'une surface de rail de guidage opposée.
